# FASCICULE DE BREVET EUROPEEN

(11) **EP 3 008 872 B1**
(45) Date de publication et mention de la délivrance du brevet: **05.09.2018**
(21) Numéro de dépôt: 14736903.7
(22) Date de dépôt: 13.06.2014
(51) Int. Cl.: H04L 29/06

(54) **PROCÉDÉ D'AUTHENTIFICATION D'UN TERMINAL PAR UNE PASSERELLE D'UN RÉSEAU INTERNE PROTÉGÉ PAR UNE ENTITÉ DE SÉCURISATION DES ACCÈS**
VERFAHREN ZUR AUTHENTIFIZIERUNG EINES ENDGERÄTS DURCH EIN GATEWAY EINES INTERNEN NETZES MIT SCHUTZ DURCH EINE EINHEIT ZUR BEREITSTELLUNG VON SICHEREM ZUGANG
METHOD FOR AUTHENTICATING A TERMINAL BY A GATEWAY OF AN INTERNAL NETWORK PROTECTED BY AN ENTITY PROVIDING SECURE ACCESS

(30) Priorité: 14.06.2013 FR 1355595
(43) Date de publication de la demande: 20.04.2016
(73) Titulaire: Orange, 75015 Paris (FR)
(72) Inventeur: HE, Ruan, F-92130 Issy Les Moulineaux (FR); CHAWKI, Jamil, F-22300 Lannion (FR)
(74) Mandataire: Fontenelle, Sandrine
(86) Numéro de dépôt international: PCT/FR2014/051462
(87) Numéro de publication internationale: WO 2014/199102

(56) Documents cités:
- EP-A2- 1 049 036
- RICHARD K LOMOTEY ET AL: "Middleware-Layer for Authenticating Mobile Consumers of Amazon S3 Data*", CLOUD ENGINEERING (IC2E), 2013 IEEE INTERNATIONAL CONFERENCE ON, IEEE, 25 mars 2013 (2013-03-25), pages 108-113, XP032422300, DOI: 10.1109/IC2E.2013.10 ISBN: 978-1-4673-6473-7

## Description

### Arrière-plan de l'invention

L'invention se rapporte au domaine général des télécommunications.

Elle concerne plus particulièrement une technique permettant de gérer de façon sécurisée l'accès à un service offert par un fournisseur de service, par un terminal d'un utilisateur enregistré auprès d'un réseau dit « interne » sécurisé (i.e. protégé par une entité de sécurisation des accès au réseau), lorsque ce terminal et/ou le fournisseur du service auquel il tente d'accéder se trouve(nt) dans un réseau dit externe distinct du réseau interne, potentiellement non sécurisé.

Le réseau interne sécurisé peut être par exemple un réseau privé d'entreprise, protégé par un pare-feu ou « firewall » en anglais. Aucune limitation n'est attachée à la localisation de ce réseau sécurisé. Ainsi le réseau interne sécurisé peut être externalisé, typiquement dans un nuage informatique appelé « cloud » en anglais.

L'invention s'inscrit ainsi de façon avantageuse mais non limitative dans le contexte du modèle dit de « logiciel en tant que service », aussi connu sous l'appellation de « Software as a Service » en anglais (ou SaaS), et du modèle dit d' « infrastructure en tant que service », aussi connu sous l'appellation de « Infrastructure as a Service » en anglais (ou IaaS).

Les solutions SaaS et IaaS connaissent actuellement une forte croissance et sont principalement développées à destination des entreprises. Ces solutions s'appuient sur un modèle d'offre de services permettant à des entreprises d'externaliser tout ou partie de leur système d'information. Ce modèle offre en outre la possibilité à un client ou à une application associé(e) (i.e. rattaché(e)) à une entreprise d'accéder aisément à une pluralité de services internes (ex. messagerie électronique ou vidéo) ou externes à l'entreprise (ex. téléchargements de fichiers ou de vidéos, plateforme de virtualisation informatique), et ce à n'importe quel moment et à partir de n'importe quel terminal.

Dans un tel contexte, il est important de contrôler efficacement l'accès par le client ou l'application rattaché(e) à l'entreprise d'une part au réseau de l'entreprise et d'autre part au service.

Il existe aujourd'hui des solutions qui permettent de contrôler efficacement l'accès via un terminal, par un client rattaché à une entreprise (ex. un employé de cette entreprise), à un service autorisé par celle-ci par l'intermédiaire du réseau de l'entreprise lorsque le terminal du client est connecté directement à ce réseau. Ces solutions s'appuient par exemple sur la mise en oeuvre de protocoles d'authentification du terminal tels que les protocoles LDAP (Lightweight Directory Access Protocol), SAML2.0 (Security Assertion Markup Language) ou encore Kerberos, suivis de protocoles d'autorisation permettant de vérifier que le terminal est bien autorisé à accéder au service requis. Ces divers protocoles prévoient généralement l'interrogation d'une base de données de service maintenue dans le réseau de l'entreprise (ou « service directory » en anglais), regroupant les comptes des utilisateurs de l'entreprise et reflétant les attributs associés à ces utilisateurs en matière de droits d'accès aux services internes ou externes proposés (i.e. autorisés) par l'entreprise.

Toutefois, l'essor et la popularité sans cesse grandissante des terminaux mobiles et/ou portables de nos jours rendent de plus en plus courantes les situations dans lesquelles un client rattachée à l'entreprise souhaite accéder à un service interne ou externe autorisé par celle-ci par l'intermédiaire d'un réseau de télécommunications sans fil tel que par exemple un réseau mobile, WLAN (Wireless Local Area Network) ou WiFI (Wireless Fidelity)), qui est externe au réseau de l'entreprise.

Une telle situation se présente typiquement lorsqu'un employé d'une entreprise envisage de travailler à distance, par exemple depuis son domicile, en se connectant au réseau sécurisé de son entreprise (situation dite de télétravail).

Une telle situation peut également se rencontrer lorsqu'un employé d'une entreprise souhaite accéder à un service autorisé par celle-ci en utilisant un compte enregistré auprès du fournisseur du service au nom de l'entreprise (ex. avec un identifiant et un mot de passe propres à l'entreprise, et non à l'employé à proprement parler).

Le réseau de télécommunications sans fil utilisé alors par le terminal du client ou de l'employé pour se connecter au réseau interne de l'entreprise et/ou accéder aux services autorisés par celle-ci est considéré par essence comme « non sécurisé » par rapport au réseau interne de l'entreprise, notamment parce qu'il n'est pas géré par celle-ci.

Par ailleurs, sur ce réseau de télécommunication sans fil, le terminal du client peut faire l'objet d'attaques à l'insu de son utilisateur via une (ou des) application(s) malveillante(s) qui peut notamment avoir pour dessein de compromettre l'intégrité et le fonctionnement du réseau d'entreprise lorsque le terminal accède à celui-ci, ou d'usurper les identifiant et mot de passe associés le cas échéant au compte de l'entreprise auprès du ou des fournisseurs de service, qu'envoie le client via son terminal lorsqu'il tente d'accéder au(x) service(s) offert(s) par ce(s) fournisseur(s).

Il existe dans l'état de la technique des solutions qui proposent l'établissement d'un tunnel virtuel sécurisé entre le terminal du client et le réseau d'entreprise, afin de permettre au terminal de se connecter au réseau d'entreprise et d'utiliser les services autorisés par celui-ci via un réseau non sécurisé sans compromettre la sécurité du réseau d'entreprise. De telles solutions sont aussi connues sous le nom de réseaux privés virtuels ou VPN pour « Virtual Private Network » en anglais.

Toutefois ces solutions sont relativement lourdes pour le client en matière d'utilisation, car elles requièrent de nombreuses actions de sa part comme l'installation et le lancement d'une application dédiée depuis son terminal, l'entrée de données d'authentification éventuellement synchronisées à l'aide d'un jeton ou « token » en anglais de sécurité, etc., et imposent obligatoirement au terminal d'accéder au(x) service(s) par l'intermédiaire du tunnel sécurisé établi, ce qui peut ralentir cet accès.

Le document EP 1049036, 2 novembre 2000 (2000-11-02), décrit un procédé permettant de réaliser des transactions financières de façon sécurisée sur Internet en utilisant un navigateur web via un tunnel VPN securise par un pare-feu.

### Objet et résumé de l'invention

L'invention permet notamment de pallier à ces inconvénients en proposant un procédé d'authentification d'un terminal équipé d'un navigateur web, par une passerelle d'un réseau dit interne, protégé par une entité de sécurisation des accès, ce procédé comprenant :
- suite à la réception d'une requête en provenance du navigateur web du terminal comprenant un identifiant d'utilisateur, une étape d'obtention de données d'authentification associées à cet identifiant d'utilisateur stockées dans une base de données du réseau interne ;
- une étape de configuration d'un serveur mandataire autorisant à un ensemble déterminé de paramètres de connexion un accès audit réseau interne à travers l'entité de sécurisation des accès ;
- une étape de génération d'une première application à partir de paramètres de cet ensemble déterminé de paramètres de connexion, ladite première application étant protégée à l'aide d'au moins une partie déterminée des données d'authentification et apte à établir, lors de son exécution par le navigateur web du terminal, une connexion entre le terminal et le serveur mandataire utilisant ces paramètres, en réponse à la fourniture de ladite au moins une partie déterminée des données d'authentification ; et
- une étape de transmission de cette première application au navigateur web du terminal.

Corrélativement, l'invention vise également une passerelle d'un réseau dit interne protégé par une entité de sécurisation des accès, cette passerelle comprenant :
- un module d'obtention, activé suite à la réception d'une requête en provenance d'un navigateur web équipant un terminal comprenant un identifiant d'utilisateur, ce module d'obtention étant apte à obtenir des données d'authentification associées à cet identifiant d'utilisateur stockées dans une base de données du réseau interne ;
- un module de configuration d'un serveur mandataire autorisant à un ensemble déterminé de paramètres de connexion un accès au réseau interne à travers l'entité de sécurisation des accès ;
- un module de génération apte à générer une première application à partir de paramètres de cet ensemble déterminé de paramètres de connexion, cette première application étant protégée à l'aide d'au moins une partie déterminée des données d'authentification et apte à établir, lors de son exécution par le navigateur web du terminal, une connexion entre le terminal et le serveur mandataire utilisant ces paramètres en réponse à la fourniture de ladite au moins une partie déterminée des données d'authentification ; et
- un module de transmission de la première application au navigateur web du terminal.

Par le biais de ce procédé d'authentification et de cette passerelle, l'invention offre la possibilité à un utilisateur disposant d'un compte enregistré auprès d'un réseau interne sécurisé, d'utiliser son terminal pour bénéficier des services offerts par le réseau interne, et ce, même lorsque ce terminal se trouve en dehors du périmètre de sécurité défini par le réseau interne (autrement dit, même lorsque le terminal est connecté à un réseau externe non sécurisé). Ceci peut être accompli par l'utilisateur sans menacer l'intégrité du réseau interne, et de manière relativement aisée via un navigateur web équipant son terminal.

L'authentification proposée par l'invention s'appuie avantageusement sur les informations d'authentification stockées dans la base de données utilisateurs (ou base de données de service ou encore « Service Directory » en anglais), maintenue par le réseau interne, et qui regroupe les comptes des différents utilisateurs enregistrés auprès du réseau interne.

Plus précisément, le procédé d'authentification s'appuie sur deux principaux éléments, à savoir :
- d'une part, sur la configuration (automatique) d'un serveur mandataire (aussi connu sous l'appellation de serveur proxy), en amont ou au niveau de l'entité de sécurisation des accès qui protège le réseau interne, cette configuration permettant d'ouvrir l'accès au réseau interne par le terminal authentifié à travers l'entité de sécurisation des accès (autrement dit, d'autoriser aux requêtes en provenance du terminal authentifié l'accès au réseau interne et corrélativement d'autoriser aux requêtes à destination de ce terminal de sortir du réseau interne) ; et
- d'autre part, sur une application personnalisée pour le terminal ou plus généralement pour l'identifiant d'utilisateur (première application au sens de l'invention), générée et transmise au navigateur web du terminal, et qui permet de l'authentifier auprès du réseau interne. Cette application est générée de sorte à déclencher l'établissement d'une connexion entre le terminal et le serveur mandataire, lorsqu'elle est exécutée par le navigateur du terminal et après fourniture par l'utilisateur via son terminal d'une partie déterminée des données d'authentification associées à l'identifiant de l'utilisateur au sein du réseau interne. Le contrôle par l'application des données d'authentification fournies par le terminal permet d'authentifier celui-ci. La connexion établie le cas échéant peut être avantageusement sécurisée via des mécanismes connus en soi.

Il convient de noter qu'une application au sens de l'invention désigne un programme ou logiciel incluant des paramètres et/ou des scripts aptes à être exécutés par un navigateur web et à déclencher dynamiquement, en réponse à cette exécution, diverses actions définies par ces paramètres et/ou scripts. Cette application est par exemple générée en langage JavaScript®. Ainsi, l'exécution de la première application selon l'invention par le navigateur web du terminal (ou plus généralement par un navigateur web) déclenche, lorsque les données fournies par l'utilisateur à cette première application coïncident avec la partie des données d'authentification utilisée pour la protéger, l'établissement dynamique d'une connexion (sécurisée) pour le terminal avec le réseau interne, et plus spécifiquement avec le serveur mandataire qui se charge ensuite de router les messages en provenance du terminal authentifié vers les entités du réseau interne aptes à traiter ces requêtes.

Une telle application logicielle est considérée comme active dans le sens où elle contient un ou plusieurs scripts destinés à s'exécuter sur le navigateur web sur lequel l'application est téléchargée (ou de façon équivalente sur le navigateur web auquel l'application est transmise). Elle s'oppose en ce sens à un fichier de contenu passif conventionnel (aussi désigne par « cookie »), qui contient uniquement des éléments de contenu.

Conformément à l'invention, la première application est personnalisée pour le terminal.

Elle ouvre en effet une connexion vers le réseau interne à travers l'entité de sécurisation des accès pour le terminal une fois que celui-ci a été valablement authentifié.

Plus précisément, via la configuration du serveur mandataire, l'accès au réseau interne est ouvert à travers l'entité de sécurisation des accès pour toute communication s'appuyant sur un ensemble de paramètres (ou de façon équivalente, de caractéristiques) de connexion déterminé, tels que par exemple une adresse IP (Internet Protocol), un port d'accès, un identifiant d'utilisateur, des algorithmes de chiffrement ou des protocoles de communication, etc.

Cet ensemble de paramètres ou de caractéristiques de connexion peut être avantageusement réservé à la première application, c'est-à-dire qu'il n'est destiné à être utilisé que par celle-ci. Il est intégré en tout ou partie dans la première application de sorte que la connexion établie par la première application entre le terminal et le serveur mandataire suite à l'authentification du terminal, utilise des paramètres de connexion autorisés à accéder au réseau interne via l'entité de sécurisation des accès. La connexion ainsi établie permet au terminal de requérir ultérieurement l'accès à des services gérés par le réseau interne, pouvant être notamment offerts des plateformes extérieures au réseau interne.

Par ailleurs, la première application est protégée à l'aide de données d'authentification associées dans le réseau interne à l'identifiant d'utilisateur transmis par le terminal. Cette protection permet d'authentifier à proprement parler le terminal et ainsi de garantir que l'accès au réseau interne n'est ouvert au terminal (via l'utilisation des paramètres de connexion ayant servi lors de la configuration du serveur mandataire) que si les données fournies par l'utilisateur du terminal via son navigateur web coïncident avec les données d'authentification associées à l'identifiant d'utilisateur dans la base de données du réseau interne, ou tout du moins avec la partie déterminée de ces données d'authentification utilisée pour protéger la première application. Dans le cas contraire, aucune connexion avec le réseau interne n'est établie pour le terminal par la première application. Autrement dit, l'accès au réseau interne par le terminal est rejeté et impossible.

La génération d'une première application telle que prévue par l'invention, à la fois protégée à l'aide des données d'authentification de l'utilisateur et exécutable par le navigateur web du terminal, offre une grande flexibilité à l'opérateur du réseau interne pour paramétrer l'accès réservé au terminal. Il lui en est en effet possible de programmer aisément cette application pour qu'elle intègre les attributs de la politique d'accès qu'il souhaite appliquer (ex. connexion sécurisée, mise en oeuvre de procédures particulières de chiffrement des données, paramètres de chiffrement, etc.).

De plus, le fait que cette première application soit exécutable par le navigateur web du terminal de cette première application facilite l'expérience de l'utilisateur par rapport à l'état de la technique pour s'authentifier et accéder de manière sécurisée au réseau interne. L'utilisateur a en effet uniquement besoin d'interagir avec le navigateur web installé sur son terminal.

En outre, la programmation de la première application permet de lui appliquer une protection modulable en fonction du niveau de sécurisation recherché moyennant une complexité réduite.

Ainsi, dans un mode particulier de réalisation, au cours de l'étape de génération de la première application, ladite au moins une partie des données d'authentification utilisée pour protéger la première application est déterminée de manière aléatoire.

On renforce ainsi de manière dynamique la sécurité de l'accès au réseau interne et notamment la résistance aux attaques par des utilisateurs ou applications malveillant(e)s. En effet, grâce au changement aléatoire de la partie des données d'authentification servant à protéger la première application et corrélativement à authentifier le terminal, il devient quasiment impossible à un utilisateur ou une application malveillant(e) ayant intercepté à plusieurs reprises les applications générées par la passerelle de déduire quelle partie des données d'authentification est requise pour déclencher l'établissement d'une connexion vers le réseau interne.

Dans un autre mode de réalisation, la première application générée au cours de l'étape de génération comprend ladite au moins une partie déterminée des données d'authentification sous forme protégée.

Par exemple, la forme protégée adoptée dans la première application peut comprendre une empreinte numérique (ou condensé) de ladite au moins une partie déterminée des données d'authentification, générée à l'aide d'une fonction de hachage. Une telle fonction présente avantageusement, de façon connue de l'homme du métier, des propriétés intéressantes en termes de résistance aux collisions (i.e. il est très difficile de trouver deux messages identiques conduisant à une même empreinte numérique) et aux attaques (i.e. il est difficile de déterminer le contenu d'un message à partir de son empreinte numérique, et de générer à partir d'un message et de son empreinte numérique, un autre message ayant la même empreinte).

Ainsi, la première application ne contient pas les données d'authentification utilisées pour la protéger et déclencher l'établissement de la connexion en tant que telles, c'est-à-dire sous leur forme brute non protégée, ou encore de manière équivalente, telles qu'elles sont définies dans la base de données du réseau interne. De cette sorte, on s'assure que les données d'authentification (ou plus précisément la partie déterminée de ces données d'authentification) ne sont pas disponibles en clair dans la première application. Par conséquent, en cas d'interception de cette application par une entité malveillante, il est très difficile pour cette entité, notamment lorsque les données d'authentification ne sont présentes dans la première application que sous forme d'une empreinte numérique, de reconstituer les données d'authentification associées à l'identifiant de l'utilisateur dans le réseau interne, et donc de détourner l'utilisation du compte de l'utilisateur dans ce réseau.

Comme mentionné précédemment, la génération d'une première application apte à s'exécuter dans un navigateur web prévue par l'invention apporte de la souplesse et de la flexibilité quant aux fonctions pouvant être intégrées dans celle-ci.

Ainsi on peut envisager notamment dans un mode particulier de réalisation, que la première application est générée de sorte que la fourniture successive, un nombre prédéfini de fois, de données d'authentification du terminal ne correspondant pas à ladite au moins une partie déterminée des données d'authentification utilisée pour protéger la première application déclenche la suppression de la première application sur le navigateur du terminal.

De cette sorte, on s'assure qu'en cas d'échec de l'authentification du terminal, aucune connexion n'est établie avec le réseau interne. On évite par ailleurs les attaques pouvant être menées sur les informations stockées dans la première application, et plus précisément, lorsque les données d'authentification sont protégées et stockées dans la première application sous forme d'une empreinte numérique, les attaques menées sur cette empreinte.

Bien entendu, d'autres mécanismes de protection peuvent être considérés en variante, de façon alternative ou en complément des mécanismes précités. Notamment, d'autres procédures visant à empêcher et/ou à refuser l'établissement par la première application de la connexion entre le terminal et le serveur mandataire peuvent être envisagées.

Comme mentionné précédemment, l'invention propose avantageusement d'assurer de manière sécurisée et flexible l'accès par un terminal à un réseau interne sécurisé via une authentification de ce terminal réalisée à l'aide d'une première application exécutable par son navigateur web.

Cette authentification peut être suivie, dans un mode particulier de réalisation de l'invention, d'une procédure d'autorisation visant à permettre au terminal d'accéder à des services autorisés par le réseau interne et offerts par des plateformes de services externes au réseau interne. Autrement dit, dans ce mode particulier de réalisation, l'invention permet également d'encadrer l'accès par le terminal à des services externes offerts par des réseaux non sécurisés via le réseau interne sécurisé.

Plus précisément, l'invention vise également un procédé d'autorisation, par une passerelle d'un réseau dit interne protégé par une entité de sécurisation, d'un accès par un terminal équipé d'un navigateur web à un service offert par une plateforme de services d'un réseau dit externe distinct du réseau interne, ce procédé comprenant :
- une étape d'authentification du terminal par la passerelle comprenant l'exécution d'un procédé d'authentification selon l'invention ;
- si ce terminal est autorisé à accéder au service par un serveur de gestion des accès du réseau interne, une étape de génération d'une seconde application apte à fournir lors de son exécution par le navigateur web du terminal, une connexion directe entre le terminal et la plateforme de service pour accéder au service ; et
- une étape de transmission de la seconde application au navigateur web du terminal.

Corrélativement, dans ce mode de réalisation, la passerelle du réseau interne comprend en outre :
- un module de génération d'une seconde application, activé si le terminal est autorisé par un serveur de gestion des accès du réseau interne à accéder à un service offert par une plateforme de services d'un réseau dit externe distinct du réseau interne, cette seconde application étant apte à fournir, lors de son exécution par le navigateur web du terminal, une connexion directe entre le terminal et la plateforme de service pour accéder au service ; et
- un module de transmission apte à transmettre cette seconde application au navigateur web du terminal.

Ce mode de réalisation concerne donc une gestion simple de l'autorisation à proprement parler du terminal authentifié à accéder à un service offert par un réseau externe au réseau interne sécurisé, et vient compléter la procédure d'authentification précédemment décrite. Il prévoit la génération d'une seconde application, active, destinée à s'exécuter dans le navigateur web du terminal permettant cet accès. La seconde application est par exemple un connecteur entre le réseau du terminal et le réseau dans lequel se trouve la plateforme de service, connu en soi. La connexion ainsi établie peut être sécurisée, par exemple via l'établissement d'un tunnel de type VPN.

La seconde application est par exemple générée en langage JavaScript®, comme la première application. L'invention permet ainsi de regrouper au sein d'applications web développées en langage JavaScript®, les fonctions d'authentification et d'autorisation nécessaires pour garantir un accès sécurisé au réseau (externe) hébergeant le service depuis le réseau (externe) du terminal et ce, via le réseau interne sécurisé.

Il convient de noter qu'avantageusement, la connexion établie par la seconde application entre la plateforme de service et le terminal est directe, autrement dit, elle ne passe pas par le réseau interne sécurisé. De cette sorte, on évite un ralentissement de l'accès au service dû à un passage par le réseau interne des communications échangées entre le terminal et la plateforme de services dans le cadre de ce service, comme il peut apparaître avec l'état de la technique.

En d'autres termes, conformément à l'invention, l'authentification du terminal et l'autorisation pour ce terminal à accéder au service offert par le fournisseur de services sont gérées par le réseau interne sécurisé, tandis qu'un lien direct est ensuite établi entre le réseau du terminal et le réseau du fournisseur de services pour l'accès à proprement parler par le terminal au service offert par le fournisseur de service.

Toutefois, ce lien direct n'en reste pas moins sécurisé et contrôlé par le réseau interne sécurisé, puisqu'il est en effet déclenché et configuré par la passerelle du réseau interne. Par conséquent, et comme mentionné précédemment, la passerelle peut tirer profit de la flexibilité de programmation d'une telle application de sorte à inclure dans celle-ci divers paramètres de sécurité.

Ainsi, par exemple, dans un mode particulier de réalisation, la seconde application comprend un paramètre de sécurité échangé préalablement entre la plateforme de service et une entité du réseau interne pour accéder au service, la seconde application étant apte à fournir ce paramètre de sécurité à la plateforme de service lors de l'établissement de la connexion directe entre le terminal et la plateforme de service.

Un tel paramètre de sécurité est par exemple un jeton ou token de sécurité échangé entre la plateforme de service et l'opérateur (i.e. le propriétaire) du réseau interne lors de la création d'un compte auprès de cette plateforme de service au nom de cet opérateur. Ce jeton ne contient pas de façon avantageuse les données d'authentification associées au compte de l'opérateur auprès du fournisseur de service en tant que telles, c'est-à-dire sous forme brute.

Ce mode de réalisation permet ainsi à l'utilisateur du terminal d'accéder au service offert par la plateforme de services en utilisant les paramètres du compte de l'opérateur du réseau interne (par exemple pour un employé d'une entreprise, en utilisant les paramètres du compte ouvert auprès du fournisseur de service au nom de son entreprise), sans pour autant nécessiter l'envoi (voire la connaissance) par le terminal des données d'authentification de l'opérateur.

En d'autres termes, l'invention offre avantageusement à l'utilisateur d'un terminal connecté à un réseau quelconque (potentiellement non sécurisé), les mêmes facilités et les mêmes services que si celui-ci était connecté directement au réseau interne sécurisé, d'une part en préservant l'intégrité et la sécurité du réseau interne (grâce aux procédures d'authentification et le cas échéant d'autorisation mises en oeuvre), et d'autre part, sans requérir d'interactions/opérations complexes de l'utilisateur. L'opérateur du réseau interne peut ainsi garder un contrôle sur l'accès au service par le terminal tout en facilitant l'expérience de l'utilisateur.

Comme il apparaît à la lecture de cette description, l'invention s'appuie non seulement sur la passerelle du réseau interne qui génère les applications transmises au navigateur web du terminal, ainsi que sur les étapes des procédés d'authentification et d'autorisation mises en oeuvre par cette passerelle, mais également sur le navigateur web en lui-même du terminal qui exécute ces applications (première et le cas échéant seconde applications) reçues de la passerelle, et permet ainsi à l'utilisateur du terminal d'accéder aux services fournis par des réseaux externes non sécurisés via le réseau interne de manière sécurisée.

Ainsi, selon un autre aspect, l'invention vise également un procédé d'établissement d'une connexion avec un réseau dit interne, protégé par une entité de sécurisation des accès, ce procédé étant destiné à être mis en oeuvre par un navigateur web équipant un terminal et comprenant :
- suite à l'envoi par ce navigateur web à une passerelle du réseau interne d'une requête comprenant un identifiant d'utilisateur, une étape de réception en provenance de la passerelle d'une première application protégée à l'aide d'au moins une partie déterminée de données d'authentification associées à cet identifiant d'utilisateur dans une base de données du réseau interne ;
- une étape d'exécution de la première application comprenant :
   ∘ l'obtention de données d'authentification du terminal par la première application ; et
   ∘ si ces données d'authentification du terminal obtenues correspondent à ladite au moins une partie déterminée des données d'authentification protégeant la première application, l'établissement par la première application d'une connexion entre le terminal et un serveur mandataire associé au réseau interne, cette connexion utilisant des paramètres d'un ensemble de paramètres de connexion autorisés par le serveur mandataire à accéder au réseau interne à travers l'entité de sécurisation des accès.

Corrélativement, l'invention vise également un navigateur web destiné à être installé sur un terminal comprenant :
- un module de réception, activé suite à l'envoi d'une requête par ce navigateur web comprenant un identifiant d'utilisateur à une passerelle d'un réseau dit interne protégé par une entité de sécurisation des accès, ce module de réception étant apte à recevoir en provenance de la passerelle une première application protégée à l'aide d'au moins une partie déterminée de données d'authentification associées à cet identifiant d'utilisateur dans une base de données du réseau interne ;
- un module d'exécution apte à exécuter la première application, cette première application comprenant :
   ∘ une première unité configurée pour obtenir des données d'authentification du terminal ; et
   ∘ une deuxième unité configurée pour établir une connexion entre le terminal et un serveur mandataire associé au réseau interne si les données d'authentification du terminal obtenues par la première unité correspondent à ladite au moins une partie déterminée des données d'authentification protégeant la première application, cette connexion utilisant des paramètres d'un ensemble de paramètres de connexion autorisés par le serveur mandataire à accéder au réseau interne à travers l'entité de sécurisation des accès ;
ces unités étant activées lors de l'exécution de la première application.

L'invention vise aussi un procédé d'accès par un terminal équipé d'un navigateur web à un service offert par une plateforme de service d'un réseau dit externe, ce procédé comprenant :
- une étape d'exécution par le navigateur web du terminal d'un procédé selon l'invention résultant en l'authentification du terminal auprès d'un réseau dit interne protégé par une entité de sécurisation des accès, par une première application transmise au navigateur web par une passerelle du réseau interne, et en l'établissement par cette première application d'une connexion entre le terminal et un serveur mandataire associé au réseau interne, cette connexion utilisant un ensemble de paramètres de connexion autorisés par le serveur mandataire à accéder au réseau interne à travers l'entité de sécurisation des accès ;
- une étape d'émission par la première application, via cette connexion, d'une requête d'accès au service offert par la plateforme de service à destination du serveur mandataire ;
- si le terminal est autorisé à accéder au service, une étape de réception par le navigateur web d'une seconde application générée par la passerelle ; et
- une étape d'exécution par le navigateur web de cette seconde application comprenant la fourniture au terminal d'une connexion directe avec la plateforme de service pour accéder au service.

Corrélativement, dans un mode particulier de réalisation, la première application transmise au navigateur web du terminal comprend en outre une troisième unité configurée pour émettre via la connexion établie, à destination du serveur mandataire, une requête d'accès à un service offert par une plateforme de service d'un réseau dit externe distinct du réseau interne, cette troisième unité étant destinée à être activée lors de l'exécution de la première application par le module d'exécution, et le navigateur web comprend en outre :
- un module de réception, apte à recevoir une seconde application générée par la passerelle si le terminal est autorisé à accéder au service ; et
- un module d'exécution apte à exécuter cette seconde application, cette seconde application étant apte à fournir au terminal une connexion directe avec la plateforme de service pour accéder au service.

Selon un autre aspect encore, l'invention vise un terminal sur lequel est installé un navigateur web conforme à l'invention.

Le navigateur web, le procédé de communication et le terminal bénéficient d'avantages similaires à ceux décrits précédemment pour la passerelle et le procédé de gestion selon l'invention.

Selon un autre aspect, l'invention vise un réseau de télécommunications protégé par une entité de sécurisation des accès, ce réseau de télécommunications comprenant une passerelle selon l'invention apte à authentifier un terminal équipé d'un navigateur web conforme à l'invention.

Dans un mode particulier de réalisation, ce réseau de télécommunications comprend en outre un serveur de gestion des accès apte à vérifier si le terminal est autorisé à accéder à un service offert par une plateforme de service d'un réseau dit externe distinct du réseau interne

Dans un mode particulier de réalisation, les différentes étapes du procédé d'authentification et/ou du procédé d'autorisation et/ou du procédé d'établissement d'une connexion et/ou du procédé d'accès sont déterminées par des instructions de programmes d'ordinateurs.

En conséquence, l'invention vise aussi un programme d'ordinateur sur un support d'informations, ce programme étant susceptible d'être mis en oeuvre dans une passerelle, d'un navigateur web, ou plus généralement dans un ordinateur, ce programme comportant des instructions adaptées à la mise en oeuvre des étapes d'un procédé d'authentification et/ou d'un procédé d'autorisation et/ou d'un procédé d'établissement d'une connexion et/ou d'un procédé d'accès tel(s) que décrit(s) ci-dessus.

L'invention vise également un programme d'ordinateur sur un support d'informations, ce programme étant susceptible d'être mis en oeuvre dans un navigateur web ou plus généralement dans un ordinateur, ce programme comportant des instructions adaptées à la mise en oeuvre des étapes d'un procédé de communication tel que décrit ci-dessus.

Ces programmes peuvent utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect encore, l'invention vise aussi une application logicielle destinée à être exécutée par un navigateur web équipant un terminal et comprenant :
- une première unité configurée pour obtenir des données d'authentification du terminal ;
- une deuxième unité configurée pour établir une connexion entre le terminal et un serveur mandataire associé à un réseau dit interne protégé par une entité de sécurisation des accès si les données d'authentification du terminal obtenues par la première unité correspondent à une partie déterminée de données d'authentification associées à un identifiant d'utilisateur dans une base de données du réseau interne, ladite partie déterminée ayant été utilisée pour protéger l'application, cette connexion utilisant des paramètres d'un ensemble de paramètres de connexion autorisés par le serveur mandataire à accéder au réseau interne à travers l'entité de sécurisation des accès ;
la première et la deuxième unités étant aptes à être activées lors de l'exécution de l'application par le navigateur.

On peut également envisager, dans d'autres modes de réalisation, que le procédé d'authentification, le procédé d'autorisation, le procédé d'établissement d'une connexion, le procédé d'accès, la passerelle, la navigateur web, le terminal, l'application logicielle et le réseau de télécommunications selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un réseau de télécommunications, une passerelle et un terminal conformes à l'invention, dans un mode particulier de réalisation ;
- les figures 2 et 3 illustrent respectivement l'architecture matérielle de la passerelle et du terminal de la figure 1 ;
- la figure 4 représente les principales étapes d'un procédé d'authentification et d'un procédé d'établissement d'une connexion et d'un procédé d'accès mises en oeuvre respectivement par la passerelle et par le terminal de la figure 1 lors d'une phase d'authentification P1 du terminal par le réseau de télécommunications de la figure 1 ; et
- la figure 5 représente les principales étapes d'un procédé d'autorisation et d'un procédé d'accès mises en oeuvre respectivement par la passerelle et par le terminal de la figure 1 lors d'une phase d'autorisation P2 d'un accès de ce terminal à un service offert par un réseau externe au réseau de télécommunications de la figure 1.

### Description détaillée de l'invention

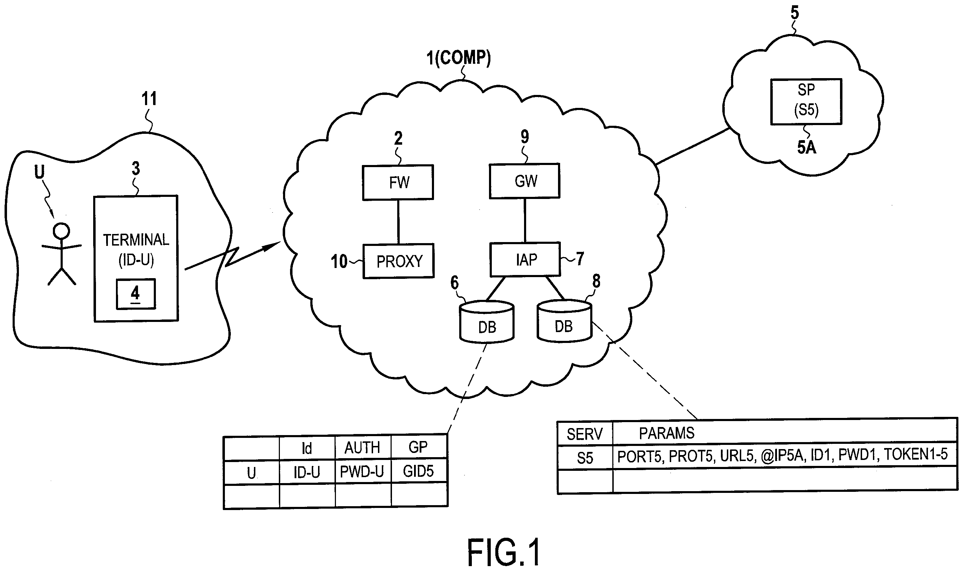

La **figure 1** représente, dans son environnement, un réseau de télécommunications 1 conforme à l'invention, dans un mode particulier de réalisation.

Dans ce mode de réalisation, le réseau de télécommunications 1 est un réseau d'entreprise sécurisé (désigné par réseau interne) rattaché à une entreprise COMP, protégé par un pare-feu ou firewall 2 connu en soi. Ce pare-feu 2 a pour fonction de sécuriser les accès au réseau 1 et applique à cet effet la politique d'accès définie par l'entreprise COMP : il contrôle ainsi le trafic entrant et sortant du réseau 1 en filtrant les flux de données échangés en fonction de types de communication autorisés par l'entreprise et définis sous la forme de règles d'accès (ex. types de trafic autorisés, machines autorisées à communiquer via le réseau, sites accessibles, etc.). Le pare-feu 2 est une entité de sécurisation protégeant le réseau 1 au sens de l'invention.

Comme mentionné précédemment, l'invention permet à un utilisateur U d'un terminal 3 équipé d'un navigateur web 4 d'accéder à au moins un service S5 offert par une plateforme de service 5A hébergée dans un réseau 5 externe au réseau sécurisé 1, par l'intermédiaire de procédures d'authentification et d'autorisation mises en oeuvre par le réseau 1. Le service S5 est par exemple ici un service de réservation en ligne de billets d'avion. Aucune restriction n'est attachée bien entendu à la nature du service S5.

Dans le mode de réalisation décrit ici, le réseau sécurisé 1 propose également un ou plusieurs services internes à l'utilisateur U. L'accès à ces services internes, une fois le terminal 3 authentifié auprès du réseau interne 1 pouvant être gérés par divers mécanismes connus de l'état de la technique, il ne sera pas détaillé davantage ici.

L'utilisateur U est par exemple un employé de l'entreprise COMP propriétaire du réseau 1 (ou à laquelle est rattaché le réseau 1), qui dispose d'un compte utilisateur déclaré et stocké dans une base de données 6 de service (ou « Service Directory » en anglais) du réseau 1. La base de données 6 est gérée ici par un fournisseur 7 d'identités et d'accès (aussi connu sous l'appellation de « Identity and Access Provider » en anglais).

Le compte de l'utilisateur U maintenu dans la base 6 contient un identifiant d'utilisateur ID-U auquel sont associées des données d'authentification PWD-U, telles qu'un mot de passe, que l'utilisateur U doit fournir pour s'authentifier auprès du réseau sécurisé 1 lorsqu'il se connecte à celui-ci.

Il contient par ailleurs un identifiant GID5 d'un groupe (d'une classe) d'utilisateurs auquel appartient l'utilisateur U. Ce groupe regroupe des utilisateurs de l'entreprise COMP partageant des droits d'accès identiques à une ou plusieurs classes de service, alloués à ces utilisateurs par l'entreprise COMP. Ces droits d'accès concernent aussi bien les services internes offerts par le réseau 1 que les services hébergés par des réseaux externes tels que le réseau 5.

A partir d'un tel identifiant et de la connaissance des droits d'accès associés à chaque groupe d'utilisateurs défini par l'entreprise COMP, le fournisseur 7 d'identités et d'accès peut déduire sans difficulté si l'utilisateur U est autorisé à accéder à un service donné, tel que par exemple au service S5.

En variante, le compte de l'utilisateur U peut identifier explicitement et individuellement les services auxquels il est autorisé à accéder. Aucune limitation en soi n'est attachée à la forme que prennent les droits d'accès attribués à l'utilisateur U dans la base de données 6.

Dans l'exemple envisagé sur la figure 1, on suppose que le groupe d'utilisateurs identifié par l'identifiant GID5 a le droit d'accéder au service S5 fourni par le réseau externe 5.

A chaque service fourni par un réseau externe (donc typiquement au service S5 fourni par la plateforme de service 5A) sont associés des paramètres d'accès à ce service.

Ces paramètres incluent par exemple ici pour le service S5, un port d'accès PORT5, une adresse URL (Uniform Resource Locator) notée URL5 où le service S5 est disponible, l'adresse IP notée @IP5A de la plateforme 5A, ainsi que le ou les protocoles de communication PROT5 destinés à être utilisés lors de cet accès.

Dans le mode de réalisation décrit ici, ces paramètres d'accès comprennent également des paramètres de sécurité associés à un compte utilisateur créé au nom de l'entreprise à laquelle est rattaché l'utilisateur U auprès du fournisseur de services 5A. Ces paramètres de sécurité intègrent ici un identifiant ID1 et un mot de passe PWD1 (i.e. des données d'authentification) associés au compte de l'entreprise COMP ainsi créé auprès de la plateforme 5A, ainsi qu'un jeton de sécurité (ou token) TOKEN1-5 échangé entre l'entreprise COMP (via une entité E1 du réseau interne 1, non représentée sur la figure 1) et la plateforme 5A lors de la création du compte. Ce jeton de sécurité est issu de façon connue en soi d'une procédure d'authentification de l'entité E1 du réseau interne 1 réalisée par le fournisseur de service 5A à l'aide de l'identifiant ID1 et du mot de passe PWD1, et désigne de manière unique et sécurisée le compte de l'entreprise COMP. Il comprend une empreinte numérique générée en appliquant une fonction de hachage connue en soi sur une forme chiffrée de l'identifiant ID1, et peut être utilisé pour s'authentifier auprès de la plateforme de service 5A et accéder au service S5 via le compte de l'entreprise sans fournir l'identifiant ID1 et le mot de passe PWD1.

Ces paramètres d'accès sont stockés ici dans une base d'accès 8 provisionnée par l'administrateur du réseau 1, et que le fournisseur 7 d'identités et d'accès peut interroger selon des moyens connus en soi.

Ainsi, dans le mode de réalisation décrit ici, le fournisseur 7 d'identités et d'accès joue le rôle d'un serveur de gestion des accès au sens de l'invention, et est apte d'une part, à vérifier si un terminal associé à un identifiant d'utilisateur est autorisé à accéder à un service déterminé en consultant la base de données de service 6, et à obtenir d'autre part, le cas échéant, en interrogeant la base d'accès 8, des paramètres d'accès à ce service.

Conformément à l'invention, pour gérer l'accès du terminal 3 de l'utilisateur U au service S5 offert par celui-ci, le réseau d'entreprise 1 comprend une passerelle 9, conforme à l'invention.

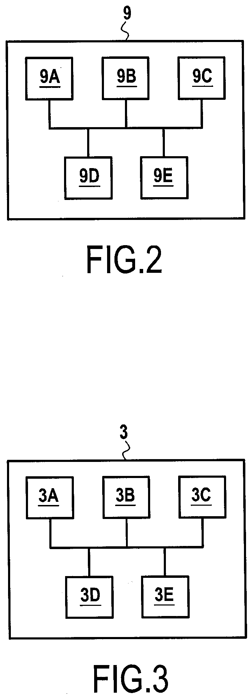

Dans le mode de réalisation décrit ici, cette passerelle 9 est un serveur web disposant de l'architecture matérielle d'un ordinateur, telle qu'illustrée à la **figure 2****.**

Elle comporte notamment un processeur 9A, une mémoire morte 9B, une mémoire vive 9C, une mémoire non volatile 9D et des moyens de communication 9E avec notamment, le terminal 3, les entités du réseau 1 et la plateforme de service 5A du réseau externe 5. Ces moyens de communication 9E intègrent par exemple une carte réseau, connue en soi et non détaillée ici.

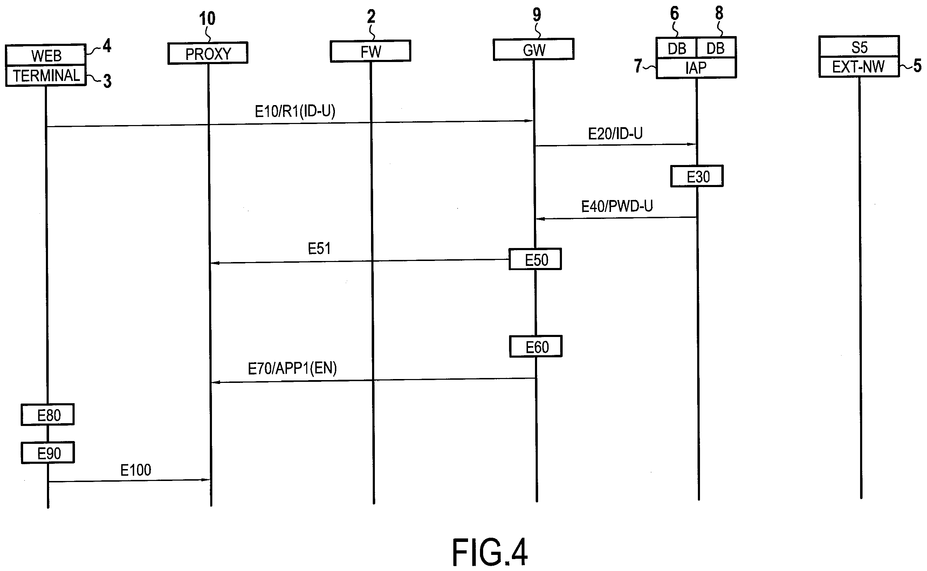

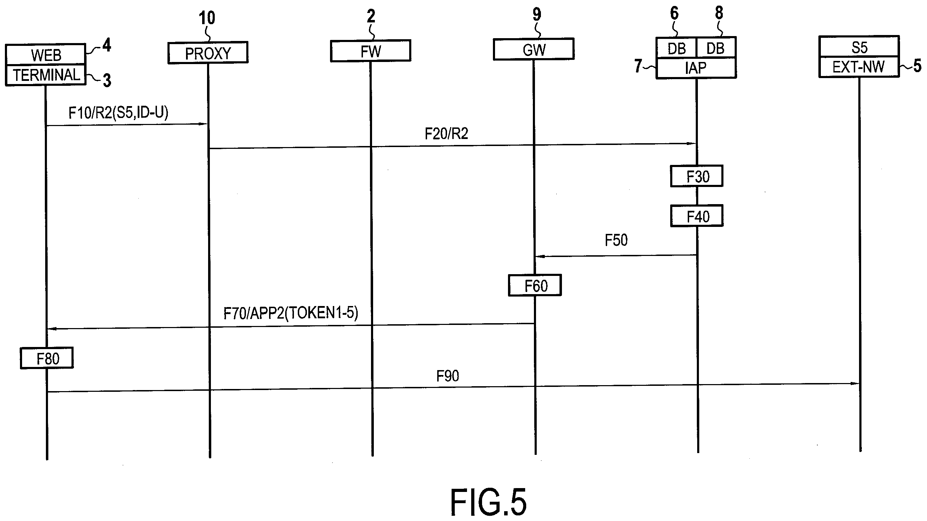

La mémoire morte 9B de la passerelle 9 constitue un support d'enregistrement conforme à l'invention, lisible par le processeur 9A et sur lequel est enregistré un programme d'ordinateur conforme à l'invention, comportant des instructions pour l'exécution des étapes d'un procédé d'authentification et d'un procédé d'autorisation conformes à l'invention, les étapes de ces procédés étant décrites ultérieurement en référence aux figures 4 et 5 respectivement dans un mode particulier de réalisation.

Ce programme d'ordinateur définit de façon correspondante des modules fonctionnels de la passerelle 9 aptes à mettre en oeuvre ces étapes, et en particulier un module d'obtention de données d'authentification associées à un identifiant d'utilisateur auprès de la base de données de service 6, un module de configuration d'un serveur mandataire pour ouvrir au terminal 3, au niveau du pare-feu 2, l'accès au réseau interne 1, un ou plusieurs modules de génération d'applications exécutables dans un navigateur et aptes à établir pour le terminal une connexion vers le réseau 1 via le serveur mandataire et une connexion directe à la plateforme de services 5A, un module d'émission/réception de requêtes et de réponses web, et dans le mode de réalisation décrit ici, un module d'obtention de paramètres d'accès au service S5. Les fonctions de ces modules sont illustrées plus en détail dans la suite de la description en référence aux étapes des procédés d'authentification et d'autorisation.

Il convient de noter que dans le mode de réalisation décrit ici, la passerelle 9 supporte les langages HTML (HyperText Markup Language) et/ou HTTPs (HyperText Transfer Protocol Secure), et le langage JavaScript®, afin de pouvoir communiquer avec le terminal 3 et notamment le navigateur 4 de ce terminal, et générer les applications destinées à ce navigateur. En d'autres termes, les modules fonctionnels précités sont aptes à utiliser ces langages lors de leurs interactions avec le navigateur 4 du terminal 3.

Aucune limitation n'est attachée au type de terminal utilisé par l'utilisateur U pour accéder au réseau sécurisé 1, ni au réseau 11 auquel est connecté ce terminal pour accéder au service S5, ni même encore au service S5. Ainsi le terminal 3 peut être un terminal mobile, un ordinateur fixe ou portable connecté à un réseau WiFI, une tablette numérique, un assistant personnel, un téléphone intelligent ou « smartphone », etc.

Le navigateur web 4 installé sur ce terminal est conforme à l'invention. Il supporte le langage HTML ainsi que le langage JavaScript®, et fournit un environnement permettant d'exécuter des applications JavaScript®.

Le terminal 3 dispose, dans le mode de réalisation décrit ici, de l'architecture matérielle d'un ordinateur, illustrée schématiquement à la **figure 3****.**

Il comporte notamment un processeur 3A, une mémoire morte 3B, une mémoire vive 3C, une mémoire non volatile 3D et des moyens de communication 3E avec notamment la passerelle 9 et la plateforme de service 5A. Ces moyens de communication 3E intègrent par exemple une carte permettant au terminal de communiquer via le réseau 11, connue en soi et non détaillée ici.

La mémoire morte 3B du terminal constitue un support d'enregistrement conforme à l'invention, lisible par le processeur 3A et sur lequel est enregistré un programme d'ordinateur conforme à l'invention, comportant des instructions pour l'exécution des étapes d'un procédé d'établissement d'une connexion et d'un procédé d'accès conformes à l'invention, les étapes de ces procédés étant décrites ultérieurement en référence aux figures 4 et 5 respectivement, dans un mode particulier de réalisation.

Ce programme d'ordinateur définit, de façon correspondante, des modules fonctionnels du navigateur web 4, et plus spécifiquement un module d'envoi de requêtes web (http et/ou HTTPS), un module de réception d'applications JavaScript® personnalisées en provenance de la passerelle 9 du réseau 1 et un module d'exécution de ces applications. Les fonctions de ces modules sont illustrées davantage dans la suite de la description en référence aux étapes des procédés d'établissement d'une connexion et d'accès mises en oeuvre par le navigateur 4.

Nous allons maintenant décrire, en référence aux figures 4 et 5, les principales étapes du procédé d'authentification et du procédé d'autorisation mis en oeuvre par la passerelle 9, ainsi que les principales étapes du procédé d'établissement et du procédé d'accès mis en oeuvre par le terminal 3 et plus particulièrement par son navigateur web 4, dans un mode particulier de réalisation s'employant à encadrer l'accès par le terminal 3 au service S5 offert par le réseau externe 5 par l'intermédiaire du réseau sécurisé 1, en utilisant notamment les informations utilisateur stockées dans sa base de données de services 6.

Dans le mode de réalisation décrit ici, la solution proposée par l'invention se déroule en deux phases, à savoir :
- une première phase P1 d'authentification à proprement parler du terminal 3 de l'utilisateur U et dont les principales étapes sont illustrées à la figure 4 ; et
- une seconde phase P2 d'autorisation de l'accès au service S5, dont les principales étapes sont illustrées à la figure 5.

Ainsi, en référence à la **figure 4** (phase P1), on suppose que l'utilisateur U rattachée à l'entreprise COMP souhaite accéder au service S5 via son réseau d'entreprise 1.

A cet effet, il envoie par l'intermédiaire de son terminal 3, via le navigateur web 4, une requête web R1 HTTP (HyperText Transfer Protocol) ou HTTPs (HyperText Transfer Protocol Secure) à la passerelle 9 du réseau sécurisé 1 (étape E10). Cette requête R1 contient l'identifiant ID-U de l'utilisateur U. On suppose qu'un port a été ouvert préalablement sur le pare-feu 2, de façon connue en soi, de sorte à permettre à la requête R1 d'atteindre la passerelle 9.

Suite à la réception de cette requête, la passerelle 9 vérifie si l'utilisateur U est autorisé à accéder au réseau 1, autrement dit s'il dispose d'un compte d'utilisateur associé à l'identifiant ID-U dans la base de données de service 6, et le cas échéant, obtient les données d'authentification associées à l'identifiant ID-U dans cette base.

A cette fin, elle interroge le fournisseur d'identités et d'accès 7 à l'aide de l'identifiant ID-U (étape E20). Celui-ci consulte la base de données de service 6 (étape E30). Dans l'exemple envisagé ici, il détermine lors de cette consultation que l'utilisateur U dispose d'un compte utilisateur enregistré dans la base 6. Ce compte est identifié par l'identifiant ID-U et contient les données d'authentification PWD-U auprès du réseau interne 1.

Le fournisseur 7 d'identités et d'accès fournit les données d'authentification PWD-U à la passerelle 9 (étape E40).

Sur obtention de ces données, la passerelle 9 autorise l'accès au réseau sécurisé 1 à travers le pare-feu 2 à un ensemble PC déterminé de paramètres (ou caractéristiques) de connexion, cet ensemble PC pouvant inclure par exemple un port d'accès, une adresse IP, l'identifiant ID-U utilisé par le terminal 3, des protocoles de communication susceptibles d'être utilisés, et le cas échéant des protocoles de chiffrement des données, etc. (étape E50). La sélection à proprement parler de ces paramètres de connexion par la passerelle 9 ne pose aucune difficulté en soi pour l'homme du métier et n'est pas détaillée ici.

A cet effet, la passerelle 9 configure (ou crée), dans le mode de réalisation décrit ici, un serveur mandataire 10 (aussi connu sous l'appellation de serveur proxy) en entrée du réseau interne 1, en amont du pare-feu 2, avec l'ensemble PC des paramètres de connexion autorisés à accéder au réseau interne 1 (étape E51). Il convient de noter que par « configuration d'un serveur mandataire en amont du pare-feu » on entend au sens de l'invention la configuration d'un serveur proxy en entrée du réseau sécurisé 1 en coupure de flux entre le terminal 3 et le filtrage opéré par le pare-feu 2, si bien que ce serveur proxy peut dans certaines configurations se trouver au niveau même du pare-feu 2.

Le serveur mandataire 10 permet ainsi, de façon connue en soi, d'ouvrir l'accès au réseau 1 à travers le pare-feu 2 aux communications s'appuyant sur (i.e. utilisant) les paramètres de connexion définis dans l'ensemble PC (i.e. aux messages (ou requêtes) émis à destination du réseau ou en provenance du réseau selon ces paramètres de connexion). La configuration d'un tel serveur est connue : elle consiste notamment à définir des règles d'accès au réseau interne 1 via le pare-feu 2 à partir des paramètres de connexion définis dans l'ensemble PC, incluant par exemple les terminaux autorisés à y accéder (identifiés par leur adresse IP ou par un identifiant d'utilisateur par exemple), les sites auxquels il est possible d'accéder, etc.

Puis, la passerelle 9 génère une application logicielle JavaScript® APP1 personnalisée pour le terminal 3 (ou plus spécifiquement pour l'identifiant ID-U utilisée par le terminal 3) à partir de paramètres de cet ensemble PC de paramètres de connexion (étape E60). Cette application APP1 est active et est apte à établir, lors de son exécution par le navigateur web 4 (ou plus généralement par un navigateur web), une connexion entre le terminal 3 (i.e. son navigateur 4) et le serveur mandataire 10 ainsi configuré utilisant les paramètres de l'ensemble PC (ex. port d'accès, algorithmes de chiffrement, etc., définis dans l'ensemble PC). L'application APP1 est une application conforme à l'invention.

Dans le mode de réalisation décrit ici, l'ensemble PC des paramètres de connexion avec lequel le serveur mandataire 10 est configuré est réservé (i.e. dédié) à l'application APP1. En d'autres termes, seule l'application APP1 est en mesure d'utiliser de tels paramètres de connexion, ils ne sont transmis à aucune autre entité par la passerelle 9.

Par ailleurs, dans le mode de réalisation décrit, la connexion prévue par l'application APP1 est une connexion sécurisée avec le réseau 5. Cette connexion sécurisée s'appuie par exemple sur le déploiement d'un tunnel de communication chiffré entre le terminal 3 et le serveur mandataire 10, défini dans l'ensemble de paramètres de connexion PC. L'application APP1 comprend ainsi tous les paramètres de configuration de ce tunnel (incluant les algorithmes nécessaires à ce déploiement tels que les méthodes de chiffrement, etc.).

La génération d'une telle application ne pose pas de problème en soi à l'homme du métier et n'est donc pas décrite en détail ici.

Conformément à l'invention, la passerelle 9 protège l'application APP1 ainsi générée à l'aide des données d'authentification PWD-U associées à l'identifiant ID-U et obtenues de la base de données de service 6.

A cet effet, dans le mode de réalisation décrit ici, la passerelle 9 inclut dans l'application APP1 une condition à l'établissement de la connexion entre le terminal 3 et le serveur mandataire 10. Selon cette condition, la connexion sécurisée n'est établie que si le terminal 3 fournit à l'application APP1 au moins une partie déterminée P-PWD-U des données d'authentification PWD-U associées à l'identifiant ID-U dans la base de données de service 6, comme décrit plus en détail ultérieurement.

Cette partie est déterminée ici par la passerelle 9 de manière aléatoire, de sorte qu'à chaque application générée par la passerelle 9, cette partie est susceptible de varier. Ainsi, par exemple, une application peut être protégée par les 4 premiers caractères des données d'authentification obtenues par la passerelle, une autre par les 4 derniers caractères, une autre encore par 4 caractères du milieu, etc. Aucune limitation n'est attachée au nombre de caractères des données d'authentification retenus pour former cette partie P-PWD-U (on peut également avoir P-PWD-U=PWD-U).

Dans une variante de réalisation, la passerelle 9 choisit toujours les mêmes caractères des données d'authentification pour former la partie P-PWD-U.

La partie des données d'authentification P-PWD-U retenue par la passerelle 9 pour protéger l'application APP1 est, dans le mode de réalisation, mémorisée par l'application APP1 sous forme protégée.

A cette fin, la passerelle 9 applique une fonction de hachage, connue en soi, sur la partie P-PWD-U afin de générer une empreinte numérique EN (ou condensé) de ces données. L'empreinte numérique EN et la fonction de hachage sont ensuite mémorisées dans l'application APP1. De cette sorte, il est impossible à partir de l'empreinte numérique EN disponible dans l'application APP1 de retrouver la partie des données d'authentification P-PWD-U utilisée par la passerelle 9 pour protéger l'application APP1.

En d'autres termes, l'application APP1 ne contient, à aucun moment, les données d'authentification PWD-U (ou la partie P-PWD-U) en tant que telles, c'est-à-dire sous forme brute non protégée (i.e. en clair) telles qu'elles sont stockées par exemple dans la base de données de service 6, mais uniquement sous forme protégée.

La passerelle 9 transmet au navigateur 4 du terminal 3 l'application APP1 ainsi générée et protégée (étape E70).

Le navigateur 4 exécute l'application APP1 reçue (étape E80).

Cette exécution se traduit par l'émission d'une invitation destinée à l'utilisateur du terminal 3 à fournir la partie déterminée des données d'authentification associées à l'identifiant ID-U dans le réseau 1 et qui a été utilisée pour protéger l'application APP1 (ex. les 4 premiers caractères des données d'authentification). Cette invitation peut prendre la forme d'un message affiché sur un écran du terminal, ou encore d'un message vocal émis par le terminal, ou d'un prompt affiché dans l'interface utilisateur déployée par le navigateur 4, etc.

On suppose ici qu'en réponse à cette invitation l'utilisateur U fournit à l'application APP1 par le biais de son terminal 3 (par exemple via une saisie sur le clavier du terminal 3) des données d'authentification correspondant à la partie attendue P-PWD-U des données d'authentification (étape E90).

L'application APP1 évalue l'empreinte numérique EN' des données d'authentification saisies par l'utilisateur U en utilisant la fonction de hachage embarqué dans l'application APP1. Elle compare ensuite l'empreinte numérique EN' ainsi évaluée avec l'empreinte numérique EN mémorisée lors de sa génération. Selon les hypothèses ci-dessus, les deux empreintes numériques EN et EN' sont identiques puisque les données d'authentification fournies par le terminal 3 à l'application APP1 coïncident avec la partie attendue P-PWD-U utilisée pour protéger l'application APP1.

Il s'ensuit le déclenchement par l'application APP1 de l'établissement d'une connexion sécurisée entre le terminal 3 (i.e. le navigateur 4) et le serveur mandataire 10 utilisant les paramètres de connexion défini dans l'ensemble PC comme mentionné précédemment (E100). Cette connexion permet au terminal 3 d'accéder au réseau interne 1 au niveau du parefeu 2. Le terminal 3 est en effet correctement authentifié auprès du réseau sécurisé 1 : l'utilisateur U du terminal 3 peut maintenant utiliser son navigateur 4 pour accéder de manière sécurisée aux facilités offertes par le réseau 1 via la connexion sécurisée ainsi établie.

En revanche, si les données d'authentification fournies par l'utilisateur U via son terminal 3 en réponse à l'invitation de l'application APP1 ne coïncident pas avec la partie attendue P-PWD-U des données d'authentification associées à l'identifiant ID-U qui a servi à protéger l'application APP1, l'authentification du terminal 3 échoue.

Dans le mode de réalisation décrit ici, l'application APP1 est configurée de sorte à réitérer son invitation auprès de l'utilisateur du terminal 3 en cas d'échec de l'authentification un nombre prédéfini de fois (ex. 3 fois). Au-delà de ce nombre, en l'absence de données d'authentification fournies par le terminal 3 à l'application APP1 coïncidant avec la partie P-PWD-U, l'application APP1 ne déclenche pas l'établissement de la connexion sécurisée entre le terminal 3 et le serveur mandataire 10. Autrement dit, l'application APP1 bloque l'accès au réseau sécurisé 1 par le terminal 3.

Plus spécifiquement, dans le mode de réalisation décrit ici, l'application APP1 est programmée de sorte à déclencher sa propre suppression du navigateur 4 lorsque le nombre maximal d'authentifications autorisé est atteint.

En variante, son utilisation peut être bloquée, ou tout autre mécanisme permettant d'empêcher éventuellement définitivement la connexion de s'établir à partir de l'application APP1 peut être envisagé.

Nous allons maintenant décrire, en référence à la **figure 5****,** la seconde phase P2 d'autorisation mise en oeuvre suite à l'authentification du terminal 3.

On suppose maintenant que le terminal 3 émet, via son navigateur 4 et plus précisément via l'application APP1, une requête d'accès R2 au service S5 offert par le fournisseur de service 5A hébergé dans le réseau externe 5 (étape F10).

Cette requête d'accès R2 emprunte la connexion sécurisée établie précédemment par l'application APP1 entre le terminal 3 et le serveur mandataire 10, suite à l'authentification du terminal 3. Elle est donc envoyée au (ou interceptée par le) serveur mandataire 10. Elle contient ici l'identifiant d'utilisateur ID-U.

Le serveur mandataire 10 transfère la requête R2 vers le fournisseur d'identités et d'accès 7 (étape F20).

Sur réception de cette requête R2, le fournisseur d'identités et d'accès 7 vérifie que le terminal 3 est bien autorisé à accéder au service S5 (étape F30).

A cet effet, dans le mode de réalisation décrit ici, il consulte la base de données de service 6 et les informations stockées dans le compte utilisateur associées à l'identifiant ID-U, notamment le groupe d'utilisateurs GID5 auquel appartient l'utilisateur U.

Le fournisseur d'identités et d'accès 7 détermine de façon connue à partir de ce groupe d'utilisateurs les divers droits d'accès qui lui ont été attribués par l'administrateur (ou l'opérateur) du réseau sécurisé 1. Il détermine ainsi ici que l'utilisateur U attaché à l'identifiant ID-U est en droit d'accéder au service S5.

Il convient de noter qu'aucune limitation n'est attachée à la forme que peut prendre cette vérification et à la façon dont la politique d'accès aux services définie par l'administrateur du réseau 1 est reflétée (i.e. directement dans la base de données 6, via un serveur ou un agent d'accès, etc.).

Le fournisseur d'identités et d'accès 7 obtient alors auprès de la base d'accès 8 les paramètres d'accès requis pour accéder au service S5 (étape F40), à savoir ici, le port PORT5, l'adresse URL5, l'adresse @IP5A, les protocoles de communications PROT5 et le jeton de sécurité TOKEN1-5 négocié entre la plateforme de service 5A et l'entité E1 du réseau sécurisé 1.

Le fournisseur d'identités et d'accès 7 envoie alors une requête à la passerelle 9 lui demandant de générer une application destinée à fournir au terminal 3 l'accès au service S5 requis (étape F50). Cette requête comprend les paramètres d'accès précédemment cités.

Sur réception de cette requête, la passerelle 9 génère une application APP2 à partir des paramètres d'accès transmis par le fournisseur d'identités et d'accès 7 (étape F60). Cette application APP2 est une application JavaScript® active destinée à s'exécuter dans le navigateur 4 du terminal 3 et à établir une connexion directe sécurisée entre le terminal 3 et la plateforme 5A pour permettre à l'utilisateur U d'accéder au service 5. Cette application APP2 est par exemple un connecteur de type SSH (Secure SHell) générée à partir des paramètres d'accès transmis par le fournisseur d'identités et d'accès 7. Elle inclut notamment le jeton de sécurité TOKEN1-5 permettant au terminal 3 d'accéder au service S5 au nom de l'entreprise COMP auquel est rattaché le réseau sécurisé 1.

La passerelle 9 transmet cette application APP2 au navigateur 4 (étape F70). Dans le mode de réalisation décrit ici, l'application APP2 est transmise via la connexion sécurisée établie par l'application APP1 entre le serveur mandataire 10 et le navigateur 4 du terminal 3.

Le navigateur 4 exécute l'application APP2 ainsi reçue (étape F80).

Cette exécution se traduit par la fourniture par l'application APP2 au terminal 3 d'une connexion directe avec la plateforme de service 5A, et corrélativement par l'accès direct par le terminal 3 au service S5.

Plus précisément, dans le mode de réalisation décrit ici, l'application APP2 établit automatiquement lors de son exécution par le navigateur 4, une connexion sécurisée SSH avec la plateforme de service 5A identifiée par son adresse @IP5A. Elle télécharge par ailleurs la page identifiée par l'adresse URL5 sur laquelle le service S5 est accessible. Le jeton de sécurité TOKEN1-5 est également fourni à la plateforme de service 5A afin de permettre à l'utilisateur du terminal 3 d'accéder directement au service de réservation en ligne S5 au nom de son entreprise COMP, et ce sans fournir les données d'authentification du compte associé à celle-ci auprès du fournisseur de service 5A (étape F90).

Dans le mode de réalisation décrit ici illustré à la figure 5, on a envisagé, suite à l'authentification du terminal 3 conformément au procédé d'authentification et au procédé d'établissement d'une connexion selon l'invention, l'accès par ce terminal à un service S5 offert par une plateforme externe au réseau interne 1. Toutefois cette hypothèse n'est pas limitative en soi : le procédé d'authentification et le procédé d'établissement d'une connexion peuvent également être mis en oeuvre pour authentifier le terminal 3 en amont d'un accès par celui-ci à un service interne au réseau 1.

En outre, il convient de noter que dans la description qui précède, certaines entités du réseau 1 comme le fournisseur d'identités et d'accès 7 et la passerelle 9 apparaissent comme des entités fonctionnelles distinctes. Toutefois, ces entités peuvent coexister au sein d'un même dispositif (matériel ou logiciel) ou être intégrées dans des dispositifs distincts.

## Revendications

1. Procédé d'authentification d'un terminal (3) équipé d'un navigateur web (4), par une passerelle (9) d'un réseau (1) dit interne, protégé par une entité de sécurisation des accès (2), ce procédé comprenant :
- suite à la réception (E10) d'une requête (R1) en provenance du navigateur web du terminal comprenant un identifiant d'utilisateur (ID-U), une étape (E40) d'obtention de données d'authentification (PWD-U) associées audit identifiant d'utilisateur et stockées dans une base de données (6) du réseau interne ;
- une étape de configuration (E50,E51) d'un serveur mandataire (10) autorisant à un ensemble déterminé de paramètres de connexion un accès audit réseau interne à travers l'entité de sécurisation des accès ;
- une étape de génération (E60) d'une première application (APP1) à partir de paramètres dudit ensemble déterminé de paramètres de connexion, ladite première application étant protégée à l'aide d'au moins une partie déterminée desdites données d'authentification et apte à établir, lors de son exécution par le navigateur web (4) du terminal (3), une connexion entre ledit terminal et ledit serveur mandataire (10) utilisant lesdits paramètres, en réponse à la fourniture de ladite au moins une partie déterminée des données d'authentification si ladite première application détermine que des données qui lui sont fournies par un utilisateur via ledit terminal correspondent à ladite au moins une partie déterminée des données d'authentification ; et
- une étape de transmission (E70) de ladite première application au navigateur web du terminal.

2. Procédé d'authentification selon la revendication 1 dans lequel au cours de l'étape de génération (E60) de ladite première application, ladite au moins une partie des données d'authentification utilisée pour protéger cette application est déterminée de manière aléatoire.

3. Procédé d'authentification selon la revendication 1 ou 2 dans lequel la première application générée au cours de l'étape de génération (E60) comprend ladite au moins une partie déterminée des données d'authentification sous forme protégée.

4. Procédé d'authentification selon la revendication 3 dans lequel ladite forme protégée comprend une empreinte numérique de ladite au moins une partie déterminée des données d'authentification générée à l'aide d'une fonction de hachage.

5. Procédé d'authentification selon l'une quelconque des revendications 1 à 4 dans lequel ladite première application (APP1) est en langage JavaScript®.

6. Procédé d'authentification selon l'une quelconque des revendications 1 à 5 dans lequel la première application (APP1) est générée de sorte à la fourniture successive un nombre prédéfini de fois de données d'authentification du terminal ne correspondant pas à ladite au moins une partie déterminée des données d'authentification utilisée pour protéger la première application déclenche la suppression de ladite première application.

7. Procédé d'autorisation, par une passerelle (9) d'un réseau (1) dit interne protégé par une entité de sécurisation (2), d'un accès par un terminal (3) équipé d'un navigateur web (4) à un service (S5) offert par une plateforme de services (5A) d'un réseau dit externe (5) distinct du réseau interne (1), ce procédé comprenant :
- une étape d'authentification dudit terminal (3) par la passerelle (9) comprenant l'exécution d'un procédé d'authentification selon l'une quelconque des revendications 1 à 6 ;
- si ledit terminal (3) est autorisé à accéder audit service, une étape de génération (F60) d'une seconde application (APP2) apte à fournir, lors de son exécution par le navigateur web du terminal, une connexion directe entre ledit terminal et ladite plateforme de service (5A) pour accéder audit service (S5) ; et
- une étape de transmission (F70) de ladite seconde application au navigateur web du terminal.

8. Procédé d'autorisation selon la revendication 7 dans lequel ladite seconde application (APP2) comprend un paramètre de sécurité (TOKEN1-5) échangé préalablement entre ladite plateforme de service (5A) et une entité du réseau interne (1) pour accéder audit service (S5), ladite seconde application (APP2) étant apte à fournir ce paramètre de sécurité à ladite plateforme de service (5A) lors de l'établissement de la connexion directe entre le terminal (3) et ladite plateforme de service (5A).

9. Procédé d'autorisation selon la revendication 7 ou 8 dans lequel la seconde application (APP2) est en langage JavaScript®.

10. Procédé d'établissement d'une connexion avec un réseau dit interne (1), protégé par une entité de sécurisation des accès (2), ledit procédé étant destiné à être mis en oeuvre par un navigateur web (4) équipant un terminal (3) et comprenant :
- suite à l'envoi par ledit navigateur web à une passerelle (9) du réseau interne d'une requête (R1) comprenant un identifiant d'utilisateur (ID-U), une étape de réception (E70) en provenance de ladite passerelle d'une première application (APP1) protégée à l'aide d'au moins une partie déterminée de données d'authentification (PWD-U) associées audit identifiant d'utilisateur dans une base (6) de données du réseau interne ;
- une étape d'exécution (E80-E100) de ladite première application comprenant :
∘ l'obtention (E90) de données d'authentification du terminal (3) par la première application ; et
∘ si lesdites données d'authentification du terminal obtenues correspondent à ladite au moins une partie déterminée desdites données d'authentification protégeant la première application, l'établissement (E100) par la première application d'une connexion entre ledit terminal (3) et un serveur mandataire (10), ladite connexion utilisant des paramètres d'un ensemble de paramètres de connexion autorisés par ledit serveur mandataire à accéder audit réseau interne à travers ladite entité de sécurisation des accès.

11. Procédé d'accès par un terminal (3) équipé d'un navigateur web (4) à un service (S5) offert par une plateforme de service (5A) d'un réseau dit externe, ledit procédé comprenant :
- une étape d'exécution par le navigateur web (4) du terminal (3) d'un procédé selon la revendication 10 résultant en l'authentification dudit terminal (3) auprès d'un réseau dit interne protégé par une entité de sécurisation des accès (2), par une première application (APP1) transmise audit navigateur web (4) par une passerelle (9) du réseau interne, et en l'établissement d'une connexion par ladite première application entre ledit terminal (3) et un serveur mandataire (10), ladite connexion utilisant des paramètres d'un ensemble de paramètres de connexion autorisés par ledit serveur mandataire à accéder audit réseau interne à travers l'entité de sécurisation des accès ;
- une étape d'émission par ladite première application (APP1), via ladite connexion, d'une requête d'accès (R2) audit service (S5) offert par ladite plateforme de service (5A) à destination du serveur mandataire (10) ;
- si le terminal (3) est autorisé à accéder audit service, une étape de réception (F70) par le navigateur web (4) d'une seconde application (APP2) générée par la passerelle (9) ; et
- une étape d'exécution (F80) par le navigateur web de ladite seconde application comprenant la fourniture (F90) au terminal d'une connexion directe avec ladite plateforme de service (5A) pour accéder audit service.

12. Programme d'ordinateur comportant des instructions pour l'exécution des étapes du procédé d'authentification selon l'une quelconque des revendications 1 à 9 ou d'un procédé d'établissement d'une connexion selon la revendication 10 ou d'un procédé d'accès selon la revendication 11 lorsque ledit programme est exécuté par un ordinateur.

13. Support d'enregistrement lisible par un ordinateur sur lequel est enregistré un programme d'ordinateur comprenant des instructions pour l'exécution des étapes du procédé d'authentification selon l'une quelconque des revendications 1 à 9 ou d'un procédé d'établissement d'une connexion selon la revendication 10 ou d'un procédé d'accès selon la revendication 11.

14. Passerelle (9) d'un réseau dit interne protégé par une entité de sécurisation des accès (2), ladite passerelle comprenant :
- un module d'obtention, activé suite à la réception d'une requête (R1) en provenance d'un navigateur web (4) équipant un terminal (3) comprenant un identifiant d'utilisateur (ID-U), ledit module d'obtention étant apte à obtenir des données d'authentification (PWD-U) associées audit identifiant d'utilisateur stockées dans une base de données (6) du réseau interne ;
- un module de configuration d'un serveur mandataire (10) autorisant à un ensemble déterminé de paramètres de connexion un accès audit réseau interne à travers ladite entité de sécurisation des accès ;
- un module de génération apte à générer une première application (APP1) à partir de paramètres dudit ensemble déterminé de paramètres de connexion, ladite première application étant protégée à l'aide d'au moins une partie déterminée desdites données d'authentification et apte à établir, lors de son exécution par le navigateur web (4) du terminal (3), une connexion entre ledit terminal (3) et ledit serveur mandataire utilisant lesdits paramètres, en réponse à la fourniture de ladite au moins une partie déterminée des données d'authentification si ladite première application détermine que des données qui lui sont fournies par un utilisateur via ledit terminal correspondent à ladite au moins une partie déterminée des données d'authentification ; et
- un module de transmission de la première application au navigateur web du terminal.

15. Passerelle (9) selon la revendication 14 comprenant en outre :
- un module de génération d'une seconde application (APP2), activé si ledit terminal (3) est autorisé à accéder à un service (S5) offert par une plateforme de services (5A) d'un réseau dit externe (5) distinct du réseau interne (1), ladite seconde application étant apte à fournir, lors de son exécution par le navigateur web (4) du terminal, une connexion directe entre le terminal (3) et ladite plateforme de service (5A) pour accéder audit service (S5) ; et
- un module de transmission apte à transmettre ladite seconde application au navigateur web du terminal.

16. Navigateur web (4) destiné à être installé sur un terminal (3) comprenant :
- un module de réception, activé suite à l'envoi d'une requête (R1) par ledit navigateur web comprenant un identifiant d'utilisateur (ID-U) à une passerelle (9) d'un réseau dit interne (1) protégé par une entité de sécurisation des accès (2), ledit module de réception étant apte à recevoir en provenance de ladite passerelle une première application protégée à l'aide d'au moins une partie déterminée de données d'authentification (PWD-U) associées audit identifiant d'utilisateur dans une base de données (6) du réseau interne ;
- un module d'exécution apte à exécuter ladite première application, ladite première application comprenant :
∘ une première unité configurée pour obtenir des données d'authentification du terminal ; et
∘ une deuxième unité configurée pour établir une connexion entre ledit terminal et un serveur mandataire si lesdites données d'authentification du terminal obtenues par la première unité correspondent à ladite au moins une partie déterminée des données d'authentification protégeant la première application, ladite connexion utilisant des paramètres d'un ensemble de paramètres de connexion autorisés par ledit serveur mandataire à accéder audit réseau interne à travers l'entité de sécurisation des accès ;
ces unités étant activées lors de l'exécution de la première application.

17. Navigateur web (4) selon la revendication 16 dans lequel ladite première application comprend en outre une troisième unité configurée pour émettre via la connexion établie à destination du serveur mandataire (10) une requête d'accès (R2) à un service (S5) offert par une plateforme de service (5A) d'un réseau dit externe distinct du réseau interne, ladite troisième unité étant destinée à être activée lors de l'exécution de la première application par le module d'exécution, ledit navigateur web comprenant en outre :
- un module de réception, apte à recevoir une seconde application générée par la passerelle si le terminal est autorisé à accéder au service ; et
- un module d'exécution apte à exécuter ladite seconde application, ladite seconde application étant apte à fournir au terminal une connexion directe avec ladite plateforme de service (5A) pour accéder audit service.

18. Terminal (3) sur lequel est installé un navigateur web (4) selon la revendication 16 ou 17.

19. Réseau de télécommunications (1) dit interne protégé par une entité de sécurisation des accès (2), ledit réseau interne comprenant une passerelle (9) selon la revendication 14 ou 15 apte à authentifier un terminal (3) équipé d'un navigateur web (4) selon la revendication 16 ou 17.

20. Réseau selon la revendication 19 comprenant en outre un serveur de gestion des accès (7) apte à vérifier si ledit terminal (3) est autorisé à accéder à un service (S5) offert par une plateforme de service (5A) d'un réseau dit externe distinct du réseau interne, et dans lequel la passerelle (9) est conforme à la revendication 15 et le navigateur web du terminal est conforme à la revendication 17.

21. Application (APP1) logicielle destinée à être exécutée par un navigateur web (4) équipant un terminal (3), ladite application étant protégée par au moins une partie de données d'authentification associées à un identifiant d'utilisateur et stockées dans une base de données d'un réseau dit interne protégé par une entité de sécurisation des accès, ladite application comprenant :
- une première unité configurée pour obtenir des données d'authentification du terminal ;
- une deuxième unité configurée pour contrôler si lesdites données d'authentification obtenues par la première unité correspondent à la partie des données d'authentification protégeant ladite application, et à établir une connexion entre le terminal et un serveur mandataire associé au réseau si les données d'authentification obtenues par la première unité correspondent à la partie déterminée des données d'authentification protégeant ladite application, cette connexion utilisant des paramètres d'un ensemble de paramètres de connexion autorisés par le serveur mandataire à accéder au réseau interne à travers l'entité de sécurisation des accès ;
la première et la deuxième unités étant aptes à être activées lors de l'exécution de ladite application par ledit navigateur.

## Patentansprüche

1. Verfahren zur Authentifizierung eines mit einem Browser (4) ausgestatteten Endgeräts (3) durch ein Gateway (9) eines durch eine Zugriffssicherungsentität (2) geschützten so genannten internen Netzwerks (1), wobei dieses Verfahren enthält:
- nach dem Empfang (E10) einer vom Browser des Endgeräts kommenden, eine Benutzerkennung (ID-U) enthaltenden Anforderung (R1) einen Schritt (E40) des Erhalts von Authentifizierungsdaten (PWD-U), die der Benutzerkennung zugeordnet und in einer Datenbank (6) des internen Netzwerks gespeichert sind;
- einen Schritt der Konfiguration (E50, E51) eines Proxy Servers (10), der einer bestimmten Gruppe von Verbindungsparametern einen Zugriff auf das interne Netzwerk über die Zugriffssicherungsentität erlaubt;
- einen Schritt der Generierung (E60) einer ersten Anwendung (APP1) ausgehend von Parametern der bestimmten Gruppe von Verbindungsparametern, wobei die erste Anwendung mit Hilfe mindestens eines bestimmten Teils der Authentifizierungsdaten geschützt wird und fähig ist, bei ihrer Ausführung durch den Browser (4) des Endgeräts (3), eine Verbindung zwischen dem Endgerät und dem Proxy Server (10) unter Verwendung der Parameter als Antwort auf die Bereitstellung des mindestens einen bestimmten Teils der Authentifizierungsdaten aufzubauen, wenn die erste Anwendung bestimmt, dass Daten, die ihr von einem Benutzer über das Endgerät bereitgestellt werden, dem mindestens einen bestimmten Teil der Authentifizierungsdaten entsprechen; und
- einen Schritt der Übertragung (E70) der ersten Anwendung an den Browser des Endgeräts.

2. Authentifizierungsverfahren nach Anspruch 1, wobei während des Schritts der Generierung (E60) der ersten Anwendung der mindestens eine Teil der Authentifizierungsdaten, der verwendet wird, um diese Anwendung zu schützen, zufällig bestimmt wird.

3. Authentifizierungsverfahren nach Anspruch 1 oder 2, wobei die während des Generierungsschritts (E60) generierte erste Anwendung den mindestens einen bestimmten Teil der Authentifizierungsdaten in geschützter Form enthält.

4. Authentifizierungsverfahren nach Anspruch 3, wobei die geschützte Form einen digitalen Fußabdruck des mindestens einen bestimmten Teils der Authentifizierungsdaten enthält, der mit Hilfe einer Hash-Funktion generiert wird.

5. Authentifizierungsverfahren nach einem der Ansprüche 1 bis 4, wobei die erste Anwendung (APP1) in der Sprache JavaScript® ist.

6. Authentifizierungsverfahren nach einem der Ansprüche 1 bis 5, wobei die erste Anwendung (APP1) so generiert wird, dass eine vordefinierte Häufigkeit der aufeinanderfolgenden Bereitstellung von Authentifizierungsdaten des Endgeräts, die nicht dem mindestens einen bestimmten Teil der Authentifizierungsdaten entsprechen, der zum Schutz der ersten Anwendung verwendet wird, das Entfernen der ersten Anwendung auslöst.

7. Verfahren zur Autorisierung, durch ein Gateway (9) eines durch eine Sicherungsentität (2) geschützten so genannten internen Netzwerks (1), eines Zugriffs durch ein mit einem Browser (4) ausgestattetes Endgerät (3) auf einen Dienst (S5), der von einer Dienstplattform (5A) eines so genannten externen Netzwerks (5) angeboten wird, das sich vom internen Netzwerk (1) unterscheidet, wobei dieses Verfahren enthält:
- einen Schritt der Authentifizierung des Endgeräts (3) durch das Gateway (9), der die Ausführung eines Authentifizierungsverfahrens nach einem der Ansprüche 1 bis 6 enthält;
- wenn das Endgerät (3) autorisiert ist, auf den Dienst zuzugreifen, einen Schritt der Generierung (F60) einer zweiten Anwendung (APP2), die bei ihrer Ausführung durch den Browser des Endgeräts eine direkte Verbindung zwischen dem Endgerät und der Dienstplattform (5A) bereitstellen kann, um auf den Dienst zuzugreifen (S5); und
- einen Schritt der Übertragung (F70) der zweiten Anwendung an den Browser des Endgeräts.

8. Autorisierungsverfahren nach Anspruch 7, wobei die zweite Anwendung (APP2) einen Sicherheitsparameter (TOKEN1-5) enthält, der vorher zwischen der Dienstplattform (5A) und einer Entität des internen Netzwerks (1) ausgetauscht wird, um auf den Dienst (S5) zuzugreifen, wobei die zweite Anwendung (APP2) diesen Sicherheitsparameter beim Aufbau der direkten Verbindung zwischen dem Endgerät (3) und der Dienstplattform (5A) für die Dienstplattform (5A) bereitstellen kann.

9. Autorisierungsverfahren nach Anspruch 7 oder 8, wobei die zweite Anwendung (APP2) in der Sprache JavaScript® ist.

10. Verfahren zum Aufbau einer Verbindung mit einem von einer Zugriffssicherungsentität (2) geschützten so genannten internen Netzwerk (1), wobei das Verfahren dazu bestimmt ist, von einem Browser (4) durchgeführt zu werden, der zur Ausstattung eines Endgeräts (3) gehört, und enthält:
- nach dem Senden durch den Browser an ein Gateway (9) des interne Netzwerks einer eine Benutzerkennung (ID-U) enthaltenden Anforderung (R1), einen Schritt des Empfangs (E70), vom Gateway kommend, einer ersten Anwendung (APP1), die mit Hilfe mindestens eines bestimmten Teils von der Benutzerkennung zugeordneten Authentifizierungsdaten (PWD-U) in einer Datenbank (6) des internen internen Netzwerks geschützt wird;
- einen Schritt der Ausführung (E80-E100) der ersten Anwendung, der enthält:
∘ den Erhalt (E90) von Authentifizierungsdaten des Endgeräts (3) durch die erste Anwendung; und
∘ wenn die erhaltenen Authentifizierungsdaten des Endgeräts dem mindestens einen bestimmten Teil der die erste Anwendung schützenden Authentifizierungsdaten entsprechen, den Aufbau (E100) durch die erste Anwendung einer Verbindung zwischen dem Endgerät (3) und einem Proxy Server (10), wobei die Verbindung Parameter einer Gruppe von Verbindungsparametern verwendet, die vom Proxy Server autorisiert werden, auf das interne Netzwerk über die Zugriffssicherungsentität zuzugreifen.

11. Verfahren zum Zugriff durch ein mit einem Browser (4) ausgestattetes Endgerät (3) auf einen Dienst (S5), der von einer Dienstplattform (5A) eines so genannten externen Netzwerks angeboten wird, wobei das Verfahren enthält:
- einen Schritt der Ausführung durch den Browser (4) des Endgeräts (3) eines Verfahrens nach Anspruch 10, das in der Authentifizierung des Endgeräts (3) bei einem von einer Zugriffssicherungsentität (2) geschützten so genannten internen Netzwerk durch eine erste Anwendung (APP1), die an den Browser (4) durch ein Gateway (9) des internen Netzwerks übertragen wird, und im Aufbau einer Verbindung durch die erste Anwendung zwischen dem Endgerät (3) und einem Proxy Server (10) resultiert, wobei die Verbindung Parameter einer Gruppe von Verbindungsparametern verwendet, die vom Proxy Server autorisiert werden, auf das interne Netzwerk über die Zugriffssicherungsentität zuzugreifen;
- einen Schritt des Sendens durch die erste Anwendung (APP1), über die Verbindung, einer Zugriffsanforderung (R2) auf den von der Dienstplattform (5A) angebotenen Dienst (S5) an den Proxy Server (10);
- wenn das Endgerät (3) autorisiert ist, auf den Dienst zuzugreifen, einen Schritt des Empfangs (F70) durch den Browser (4) einer zweiten Anwendung (APP2), die vom Gateway (9) generiert wird; und
- einen Schritt der Ausführung (F80) durch den Browser der zweiten Anwendung, die die Bereitstellung (F90) an das Endgerät einer direkten Verbindung mit der Dienstplattform (5A) enthält, um auf den Dienst zuzugreifen.

12. Computerprogramm, das Anweisungen zur Ausführung der Schritte des Authentifizierungsverfahrens nach einem der Ansprüche 1 bis 9 oder eines Verfahrens zum Aufbau einer Verbindung nach Anspruch 10 oder eines Zugriffsverfahrens nach Anspruch 11 aufweist, wenn das Programm von einem Computer ausgeführt wird.

13. Computerlesbarer Aufzeichnungsträger, auf dem ein Computerprogramm aufgezeichnet ist, das Anweisungen zur Ausführung der Schritte des Authentifizierungsverfahrens nach einem der Ansprüche 1 bis 9 oder eines Verfahrens zum Aufbau einer Verbindung nach Anspruch 10 oder eines Zugriffsverfahrens nach Anspruch 11 enthält.

14. Gateway (9) eines von einer Zugriffssicherungsentität (2) geschützten so genannten internen Netzwerks, wobei das Gateway enthält:
- ein Erhaltungsmodul, das nach dem Empfang einer eine Benutzerkennung (ID-U) enthaltenden Anforderung (R1) von einem Browser (4), der zur Ausstattung eines Endgeräts (3) gehört, aktiviert wird, wobei das Erhaltungsmodul der Benutzerkennung zugeordnete Authentifizierungsdaten (PWD-U) erhalten kann, die in einer Datenbank (6) des internen Netzwerks gespeichert sind;
- ein Konfigurationsmodul eines Proxy Servers (10), das einer bestimmten Gruppe von Verbindungsparametern einen Zugriff auf das interne Netzwerk über die Zugriffssicherungsentität erlaubt;
- ein Generierungsmodul, das eine erste Anwendung (APP1) ausgehend von Parametern der bestimmten Gruppe von Verbindungsparametern generieren kann, wobei die erste Anwendung mit Hilfe mindestens eines bestimmten Teils der Authentifizierungsdaten geschützt wird und bei ihrer Ausführung durch den Browser (4) des Endgeräts (3) eine Verbindung zwischen dem Endgerät (3) und dem Proxy Server unter Verwendung der Parameter als Antwort auf die Bereitstellung des mindestens einen bestimmten Teils der Authentifizierungsdaten aufbauen kann, wenn die erste Anwendung bestimmt, dass Daten, die ihr von einem Benutzer über das Endgerät bereitgestellt werden, dem mindestens einen bestimmten Teil der Authentifizierungsdaten entsprechen; und
- ein Übertragungsmodul der ersten Anwendung an den Browser des Endgeräts.

15. Gateway (9) nach Anspruch 14, das außerdem enthält:
- ein Generierungsmodul einer zweiten Anwendung (APP2), das aktiviert wird, wenn das Endgerät (3) autorisiert ist, auf einen Dienst (S5) zuzugreifen, der von einer Dienstplattform (5A) eines so genannten externen Netzwerks (5) angeboten wird, das sich vom internen Netzwerk (1) unterscheidet, wobei die zweite Anwendung bei ihrer Ausführung durch den Browser (4) des Endgeräts eine direkte Verbindung zwischen dem Endgerät (3) und der Dienstplattform (5A) bereitstellen kann, um auf den Dienst (S5) zuzugreifen; und
- ein Übertragungsmodul, das die zweite Anwendung an den Browser des Endgeräts übertragen kann.

16. Browser (4), der dazu bestimmt ist, in einem Endgerät (3) installiert zu werden, der enthält:
- ein Empfangsmodul, das nach dem Senden einer eine Benutzerkennung (ID-U) enthaltenden Anforderung (R1) durch den Browser an ein Gateway (9) eines von einer Zugriffssicherungsentität (2) geschützten so genannten internen Netzwerks (1) aktiviert wird, wobei das Empfangsmodul vom Gateway kommend eine erste Anwendung empfangen kann, die mit Hilfe mindestens eines bestimmten Teils von der Benutzerkennung zugeordneten Authentifizierungsdaten (PWD-U) in einer Datenbank (6) des internen Netzwerks geschützt wird;
- ein Ausführungsmodul, das die erste Anwendung ausführen kann, wobei die erste Anwendung enthält:
∘ eine erste Einheit, die konfiguriert ist, Authentifizierungsdaten des Endgeräts zu erhalten; und
∘ eine zweite Einheit, die konfiguriert ist, eine Verbindung zwischen dem Endgerät und einem Proxy Server aufzubauen, wenn die von der ersten Einheit erhaltenen Authentifizierungsdaten des Endgeräts dem mindestens eine bestimmten Teil der Authentifizierungsdaten entsprechen, die die erste Anwendung schützen, wobei die Verbindung Parameter einer Gruppe von Verbindungsparametern verwendet, die vom Proxy Server autorisiert werden, auf das interne Netzwerk über die Zugriffssicherungsentität zuzugreifen;
wobei diese Einheiten bei der Ausführung der ersten Anwendung aktiviert werden.

17. Browser (4) nach Anspruch 16, wobei die erste Anwendung außerdem eine dritte Einheit enthält, die konfiguriert ist, über die aufgebaute Verbindung an den Proxy Server (10) eine Zugriffsanforderung (R2) auf einen Dienst (S5) zu senden, der von einer Dienstplattform (5A) eines so genannten externen Netzwerks, das sich vom internen Netzwerk unterscheidet, angeboten wird, wobei die dritte Einheit dazu bestimmt ist, bei der Ausführung der ersten Anwendung durch das Ausführungsmodul aktiviert zu werden, wobei der Browser außerdem enthält:
- ein Empfangsmodul, das eine zweite Anwendung empfangen kann, die vom Gateway generiert wird, wenn das Endgerät autorisiert ist, auf den Dienst zuzugreifen; und
- ein Ausführungsmodul, das die zweite Anwendung ausführen kann, wobei die zweite Anwendung dem Endgerät eine direkte Verbindung mit der Dienstplattform (5A) bereitstellen kann, um auf den Dienst zuzugreifen.

18. Endgerät (3), auf dem ein Browser (4) nach Anspruch 16 oder 17 installiert ist.

19. So genanntes internes Telekommunikationsnetzwerk (1), das von einer Zugriffssicherungsentität (2) geschützt wird, wobei das interne Netzwerk ein Gateway (9) nach Anspruch 14 oder 15 enthält, das ein mit einem Browser (4) ausgestattetes Endgerät (3) nach Anspruch 16 oder 17 authentifizieren kann.

20. Netzwerk nach Anspruch 19, das außerdem einen Verwaltungsserver der Zugriffe (7) enthält, der überprüfen kann, ob das Endgerät (3) autorisiert ist, auf einen Dienst (S5) zuzugreifen, der von einer Dienstplattform (5A) eines so genannten externen Netzwerk angeboten wird, das sich vom internen Netzwerk unterscheidet, und wobei das Gateway (9) Anspruch 15 entspricht und der Browser des Endgeräts Anspruch 17 entspricht.

21. Software-Anwendung (APP1), die dazu bestimmt ist, von einem Browser (4) ausgeführt zu werden, der zur Ausstattung eines Endgeräts (3) gehört, wobei die Anwendung von mindestens einem Teil von Authentifizierungsdaten geschützt wird, die einer Benutzerkennung zugeordnet und in einer Datenbank eines so genannten internen Netzwerks gespeichert sind, das von einer Zugriffssicherungsentität geschützt wird, wobei die Anwendung enthält:
- eine erste Einheit, die konfiguriert ist, Authentifizierungsdaten des Endgeräts zu erhalten;
- eine zweite Einheit, die konfiguriert ist zu kontrollieren, ob die von der ersten Einheit erhaltenen Authentifizierungsdaten dem Teil der Authentifizierungsdaten entsprechen, die die Anwendung schützen, und eine Verbindung zwischen dem Endgerät und einem dem Netzwerk zugeordneten Proxy Server aufzubauen, wenn die von der ersten Einheit erhaltenen Authentifizierungsdaten dem bestimmten Teil der Authentifizierungsdaten entsprechen, der die Anwendung schützt, wobei diese Verbindung Parameter einer Gruppe von Verbindungsparametern verwendet, die vom Proxy Server autorisiert werden, auf das interne Netzwerk über die Zugriffssicherungsentität zuzugreifen;
wobei die erste und die zweite Einheit bei der Ausführung der Anwendung durch den Browser aktiviert werden können.

## Claims

1. Method for authentication of a terminal (3) equipped with a web browser (4), by a gateway (9) of a so-called internal network (1) that is protected by a secure access entity (2), this method comprising:
- following the reception (E10) of a request (R1) from the web browser of the terminal comprising a user identifier (ID-U), a step (E40) of acquiring authentication data (PWD-U) associated with said user identifier and stored in a database (6) of the internal network;
- a step (E50,E51) of configuring a proxy server (10) authorizing a determined set of connection parameters to access said internal network through the secure access entity;
- a step (E60) of generating a first application (APP1) from parameters of said determined set of connection parameters, said first application being protected using at least one determined portion of said authentication data and able to establish, when it is executed by the web browser (4) of the terminal (3), a connection between said terminal and said proxy server (10) using said parameters, in response to the provision of said at least one determined portion of the authentication data if said first application determines that data that are provided to it by a user via said terminal match said at least one determined portion of the authentication data; and
- a step (E70) of transmitting said first application to the web browser of the terminal.

2. Authentication method according to Claim 1, wherein, during the step (E60) of generating said first application, said at least one portion of the authentication data used to protect this application is determined randomly.

3. Authentication method according to Claim 1 or 2, wherein the first application generated during the generation step (E60) comprises said at least one determined portion of the authentication data in protected form.

4. Authentication method according to Claim 3, wherein said protected form comprises a digital fingerprint of said at least one determined portion of the authentication data that is generated using a hash function.

5. Authentication method according to any one of Claims 1 to 4, wherein said first application (APP1) is in JavaScript® language.

6. Authentication method according to any one of Claims 1 to 5, wherein the first application (APP1) is generated such that the successive provision, a predefined number of times, of authentication data for the terminal that do not match said at least one determined portion of the authentication data that is used to protect the first application triggers the deletion of said first application.

7. Method for authorization, by a gateway (9) of a so-called internal network (1) that is protected by a secure access entity (2), of access by a terminal (3) equipped with a web browser (4) to a service (S5) offered by a service platform (5A) of a so-called external network (5) that is separate from the internal network (1), this method comprising:
- a step of authentication of said terminal (3) by the gateway (9) comprising the execution of an authentication method according to any one of Claims 1 to 6;
- if said terminal (3) is authorized to access said service, a step (F60) of generating a second application (APP2) able to provide, when it is executed by the web browser of the terminal, a direct connection between said terminal and said service platform (5A) in order to access said service (S5); and
- a step (F70) of transmitting said second application to the web browser of the terminal.

8. Authorization method according to Claim 7, wherein said second application (APP2) comprises a security parameter (TOKEN1-5) exchanged beforehand between said service platform (5A) and an entity of the internal network (1) in order to access said service (S5), said second application (APP2) being able to provide this security parameter to said service platform (5A) when the direct connection is established between the terminal (3) and said service platform (5A).

9. Authorization method according to Claim 7 or 8, wherein the second application (APP2) is in JavaScript® language.

10. Method for establishing a connection to a so-called internal network (1) that is protected by a secure access entity (2), said method being intended to be implemented by a web browser (4) with which a terminal (3) is equipped and comprising:
- following the sending, by said web browser to a gateway (9) of the internal network, of a request (R1) comprising a user identifier (ID-U), a step (E70) of receiving, from said gateway, a first application (APP1) protected using at least one determined portion of authentication data (PWD-U) associated with said user identifier in a database (6) of the internal network;
- a step (E80-E100) of executing said first application comprising:
∘ acquisition (E90) of authentication data for the terminal (3) by the first application; and
∘ if said acquired authentication data for the terminal match said at least one determined portion of said authentication data protecting the first application, establishment (E100), by the first application, of a connection between said terminal (3) and a proxy server (10), said connection using parameters of a set of connection parameters authorized by said proxy server to access said internal network through said secure access entity.

11. Method for accessing, by way of a terminal (3) equipped with a web browser (4), a service (S5) offered by a service platform (5A) of a so-called external network, said method comprising:
- a step of execution, by the web browser (4) of the terminal (3), of a method according to Claim 10, resulting in the authentication of said terminal (3) with a so-called internal network that is protected by a secure access entity (2), by a first application (APP1) transmitted to said web browser (4) by a gateway (9) of the internal network, and in the establishment of a connection, by said first application, between said terminal (3) and a proxy server (10), said connection using parameters of a set of connection parameters authorized by said proxy server to access said internal network through the secure access entity;
- a step of transmission, by said first application (APP1), via said connection, of a request (R2) to access said service (S5) offered by said service platform (5A) to the proxy server (10);
- if the terminal (3) is authorized to access said service, a step (F70) of reception, by the web browser (4), of a second application (APP2) generated by the gateway (9); and
- a step (F80) of execution, by the web browser, of said second application comprising the provision (F90), to the terminal, of a direct connection to said service platform (5A) in order to access said service.

12. Computer program including instructions for executing the steps of the authentication method according to any one of Claims 1 to 9 or of a method for establishing a connection according to Claim 10 or of an access method according to Claim 11 when said program is executed by a computer.

13. Computer-readable recording medium on which there is recorded a computer program comprising instructions for executing the steps of the authentication method according to any one of Claims 1 to 9 or of a method for establishing a connection according to Claim 10 or of an access method according to Claim 11.

14. Gateway (9) of a so-called internal network that is protected by a secure access entity (2), said gateway comprising:
- an acquisition module, activated following the reception of a request (R1) from a web browser (4) with which a terminal (3) is equipped comprising a user identifier (ID-U), said acquisition module being able to acquire authentication data (PWD-U) associated with said user identifier and stored in a database (6) of the internal network;
- a module for configuring a proxy server (10) authorizing a determined set of connection parameters to access said internal network through said secure access entity;
- a generation module able to generate a first application (APP1) from parameters of said determined set of connection parameters, said first application being protected using at least one determined portion of said authentication data and able to establish, when it is executed by the web browser (4) of the terminal (3), a connection between said terminal (3) and said proxy server using said parameters, in response to the provision of said at least one determined portion of the authentication data if said first application determines that data that are provided to it by a user via said terminal match said at least one determined portion of the authentication data; and
- a module for transmitting the first application to the web browser of the terminal.

15. Gateway (9) according to Claim 14, furthermore comprising:
- a module for generating a second application (APP2), activated if said terminal (3) is authorized to access a service (S5) offered by a service platform (5A) of a so-called external network (5) that is separate from the internal network (1), said second application being able to provide, when it is executed by the web browser (4) of the terminal, a direct connection between the terminal (3) and said service platform (5A) in order to access said service (S5); and
- a transmission module able to transmit said second application to the web browser of the terminal.

16. Web browser (4) intended to be installed on a terminal (3) comprising:
- a reception module, activated following the sending of a request (R1) by said web browser comprising a user identifier (ID-U) to a gateway (9) of a so-called internal network (1) that is protected by a secure access entity (2), said reception module being able to receive, from said gateway, a first application protected using at least one determined portion of authentication data (PWD-U) associated with said user identifier in a database (6) of the internal network;
- an execution module able to execute said first application, said first application comprising:
∘ a first unit configured to acquire authentication data for the terminal; and
∘ a second unit configured to establish a connection between said terminal and a proxy server if said authentication data for the terminal acquired by the first unit match said at least one determined portion of the authentication data protecting the first application, said connection using parameters of a set of connection parameters authorized by said proxy server to access said internal network through the secure access entity;
these units being activated when the first application is executed.

17. Web browser (4) according to Claim 16, wherein said first application furthermore comprises a third unit configured to transmit, via the established connection, to the proxy server (10), a request (R2) to access a service (S5) offered by a service platform (5A) of a so-called external network that is separate from the internal network, said third unit being intended to be activated when the first application is executed by the execution module, said web browser furthermore comprising:
- a reception module, able to receive a second application generated by the gateway if the terminal is authorized to access the service; and
- an execution module able to execute said second application, said second application being able to provide, to the terminal, a direct connection to said service platform (5A) in order to access said service.

18. Terminal (3) on which a web browser (4) according to Claim 16 or 17 is installed.

19. Telecommunications network (1), so-called internal telecommunications network, protected by a secure access entity (2), said internal network comprising a gateway (9) according to Claim 14 or 15 that is able to authenticate a terminal (3) equipped with a web browser (4) according to Claim 16 or 17.

20. Network according to Claim 19, furthermore comprising an access management server (7) able to verify whether said terminal (3) is authorized to access a service (S5) offered by a service platform (5A) of a so-called external network that is separate from the internal network, and wherein the gateway (9) is in accordance with Claim 15 and the web browser of the terminal is in accordance with Claim 17.

21. Software application (APP1) intended to be executed by a web browser (4) with which a terminal (3) is equipped, said application being protected by at least one portion of authentication data associated with a user identifier and stored in a database of a so-called internal network that is protected by a secure access entity, said application comprising:
- a first unit configured to acquire authentication data for the terminal;
- a second unit configured to check whether said authentication data acquired by the first unit match the portion of the authentication data protecting said application, and to establish a connection between the terminal and a proxy server associated with the network if the authentication data acquired by the first unit match the determined portion of the authentication data protecting said application, this connection using parameters of a set of connection parameters authorized by the proxy server to access the internal network through the secure access entity;
the first and the second units being able to be activated when said application is executed by said browser.
